# EUROPÄISCHE PATENTSCHRIFT

(11) **EP 0 983 178 B1**
(45) Veröffentlichungstag und Bekanntmachung des Hinweises auf die Patenterteilung: **17.07.2002**
(21) Anmeldenummer: 98924153.4
(22) Anmeldetag: 20.04.1998
(51) Int. Cl.: B60T 13/16, B60T 8/44

(54) **BREMSDRUCKGEBERANORDNUNG FÜR EINE HYDRAULISCHE KRAFTFAHRZEUGBREMSANLAGE UND DAMIT AUSGESTATTETE BREMSANLAGE**
BRAKE PRESSURE TRANSMITTER UNIT FOR A HYDRAULIC BRAKE SYSTEM FOR MOTOR VEHICLES, AND BRAKE SYSTEM FITTED WITH SAME UNIT
SYSTEME DE TRANSMETTEUR DE PRESSION DE FREINAGE POUR SYSTEME DE FREINAGE HYDRAULIQUE D'AUTOMOBILE ET SYSTEME DE FREINAGE AINSI EQUIPE

(30) Priorität: 18.04.1997 DE 19716404
(43) Veröffentlichungstag der Anmeldung: 08.03.2000
(73) Patentinhaber: Lucas Industries Limited, West Midlands B90 4LA (GB)
(72) Erfinder: DIERINGER, Werner, D-56179 Vallendar (DE)
(74) Vertreter: Beyer, Andreas, Dr.
(86) Internationale Anmeldenummer: EP9802326
(87) Internationale Veröffentlichungsnummer: WO9847749

(56) Entgegenhaltungen:
- EP-A- 0 317 182
- EP-A- 0 436 926
- EP-A- 0 485 367
- DE-A- 3 209 337
- DE-A- 3 426 612
- DE-A- 3 903 532
- DE-A- 4 203 488
- DE-A- 4 439 904
- DE-A- 4 443 869
- DE-A- 19 501 760

## Beschreibung

Die Erfindung bezieht sich auf eine Bremsdruckgeberanordnung für eine hydraulische Kraftfahrzeugbremsanlage gemäß dem Oberbegriff des Patentanspruchs 1 und eine damit ausgestattete Bremsanlage.

Es ist allgemein bekannt, daß bei hydraulischen Bremsanlagen für Kraftfahrzeuge die Bremsdruckgeberanordnung einen sogenannten Hauptbremszylinder umfasst, um einen Bremsdruck für die Radbremse zu erzeugen, der sich proportional zu der über das Eingangsglied - üblicherweise ein Bremspedal - eingeleiteten Betätigungskraft verhält. Weiterhin ist es allgemein bekannt, die Bremsdruckgeberanordnung auch mit einem Bremskraftverstärker auszustatten, der zur Verstärkung der über das Bremspedal eingeleiteten Betätigungskraft eine Hilfskraft bereitstellt. Als Bremskraftverstärker kommen sowohl pneumatische Verstärker, die nach dem Unterdruckprinzip arbeiten, als auch hydraulische Verstärker, die mit einer Hydraulikpumpe arbeiten, in Betracht.

Ein solcher pneumatischer Bremskraftverstärker ist beispielsweise aus der DE 28 45 794 C2 bekannt, während ein hydraulischer Bremskraftverstärker beispielsweise aus der DE 44 43 869 A1 bekannt ist die die Merkmale des Oberbegriffs des Anspruchs 1 offenbart. Sowohl der pneumatische als auch der hydraulische Bremskraftverstärker weisen eine bewegliche Wand auf, die einen inneren Gehäuseraum in zwei Kammern unterteilt und eine Kraft über ein Ausgangsglied auf den Hauptbremszylinder überträgt, wenn in Abhängigkeit von einer am Eingangsglied wirksamen Kraft die Kammern einem Druckunterschied ausgesetzt sind. Im unbetätigten Zustand sind die Kammern druckausgeglichen, so daß die bewegliche Wand keine Kraft auf das Ausgangsglied überträgt. Bei dem pneumatischen Verstärker wird der Druckunterschied dadurch erzeugt, daß in einer Kammer mittels einer Unterdruckquelle ein Unterdruck erzeugt wird, während die andere Kammer mit Atmosphärendruck beaufschlagt wird. Demgegenüber wird bei dem hydraulischen Verstärker der Druckunterschied mittels einer Hydraulikpumpe erzeugt, deren Saugseite mit der einen Kammer und deren Druckseite mit der anderen Kammer verbunden ist, so daß die Hydraulikpumpe in Richtung von der einen Kammer zu der anderen Kammer fördert, um eine Bremskraftverstärkung zu erreichen.

Dennoch ist eine derartige hydraulische Bremsanlage verbesserungswürdig, weil die Verwendung eines allgemein bekannten Bremskraftverstärkers einen relativ grossen Einbauraum im Kraftfahrzeug erfordert.

Bei Verwendung eines pneumatischen Bremskraftverstärkers muß im Kraftfahrzeug desweiteren eine Unterdruckquelle bereitgestellt werden. Zwar kann bei einem mit einem Ottomotor ausgerüsteten Fahrzeug prinzipbedingt der im Ansaugtrakt erzeugte Unterdruck genutzt werden, jedoch können starke Schwankungen des auf diese Weise erzeugten Unterdrucks die Leistungsfähigkeit der Bremsanlage nachteilig beeinflußen, insbesondere im Hinblick auf die ständig steigenden Leistungsanforderungen, so daß Aufwand und Kosten für die Bereitstellung einer unabhängigen Vakuumquelle unumgänglich sind.

Nachteilig bei Verwendung eines bekannten hydraulischen Verstärkers kann sein, daß zusätzliche, in der Regel elektromagnetisch betätigte, Ventilanordnungen notwendig sind, um bei unbetätigter Bremsdruckgeberanordnung einen Druckausgleich für alle Kammern und Arbeitsräume, auch die der Radbremsen, sicherzustellen. Auch hierdurch entstehen Aufwand und Kosten.

Der Erfindung liegt daher die Aufgabe zugrunde, eine verbesserte hydraulische Bremsanlage bereitzustellen, die kompakter und mit einem geringeren Kostenwand herstellbar sowie komfortabel betätigbar ist.

Diese Aufgabe ist erfindungsgemäß mit einer Bremsdruckgeberanordnung gelöst, die die im Patentanspruch 1 angegebenen Merkmale aufweist.

Erfindungsgemäß wird der bei Betätigung der Bremsdruckgeberanordnung aufgrund der Verkleinerung des Volumens der Hydraulikkammer in der Radbremse anstehenden Bremsfluidmenge mittels der Druckerhöhungspumpe zusätzlich die Bremsfluidmenge zugeführt, die aufgrund der Verkleinerung des Volumens der zusätzlichen Hydraulikkammer an der Eingangsseite der Druckerhöhungspumpe ansteht. Diese mittels der Druckerhöhungspumpe zusätzlich in die Radbremse geförderte Bremsfluidmenge bewirkt, daß sich in der Radbremse bzw. der Hydraulikkammer ein höherer Bremsdruck als der ursprünglich in der Hydraulikkammer erzeugte Bremsdruck einstellt. Somit lässt sich in besonders vorteilhafter weise eine Verstärkung der über das Eingangsglied eingeleiteten Betätigungskraft erreichen, wobei die bei einem Einsatz eines allgemein bekannten Bremskraftverstärkers zuvor dargelegten Nachteile vermieden sind.

Zur Versorgung der hydraulischen Bremsanlage mit Bremsfluid ist vorgesehen, daß bei unbetätigter Bremsdruckgeberanordnung die Hydraulikkammer und/oder die zusätzliche Hydraulikkammer mit einem Reservoir für Bremsfluid in Verbindung steht.

Um einen Bremsdruck zu erzeugen ist weiterhin vorgesehen, daß bei betätigter Bremsdruckgeberanordnung die Hydraulikkammer und die zusätzliche Hydraulikkammer nicht mit dem Reservoir für Bremsfluid in Verbindung steht.

Damit nur die Hydraulikkammer oder die zusätzliche Hydraulikkammer eine Verbindung mit dem Reservoir für Bremsfluid aufzuweisen braucht, kann bei unbetätigter Bremsdruckgeberanordnung die Hydraulikkammer mit der zusätzlichen Hydraulikkammer in Verbindung stehen.

Bei betätigter Bremsdruckgeberanordnung steht die Hydraulikkammer mit der zusätzlichen Hydraulikkammer nicht in Verbindung, wodurch ein Umpumpen von Bremsfluid zwischen der Hydraulikkammer und der zusätzlichen Hydraulikkammer nicht möglich ist, so daß ein Bremsdruck für die Radbremse ungehindert erzeugt werden kann.

Um eine Verstärkung der über das Bremspedal eingeleiteten Betätigungskraft in der Grössenordnung allgemein bekannter Bremskraftverstärker zu erzielen, ist die Bremsdruckgeberanordnung so dimensioniert, daß sich bei Betätigung der Bremsdruckgeberanordnung das Volumen der Hydraulikkammer in einem prozentual geringeren Maße als das Volumen der zusätzlichen Hydraulikkammer verkleinert.

Dabei besteht ständig eine Verbindung von der zusätzlichen Hydraulikkammer zu der Druckerhöhungspumpe.

Aus Gründen der Einsparung von Antriebsenergie ist es besser, wenn die Betätigung der Druckerhöhungspumpe nur bei Betätigung des Bremspedals erfolgt.

In vorteilhafter Weise wird das Regelverhalten der hydraulischen Bremsanlage in Bezug auf Pedalkomfort und Dosierbarkeit dadurch verbessert, daß die Förderleistung der Druckerhöhungspumpe in Abhängigkeit einer mit der Betätigung des Bremspedals in Beziehung stehenden Grösse einstellbar ist.

Besonders vorteilhaft ist, um eine nahezu ideales Regelverhalten für die hydraulische Bremsanlage zu erzielen, wenn die Förderleistung der Druckerhöhungspumpe in Abhängigkeit von der Veränderung des Volumens der zusätzlichen Hydraulikkammer einstellbar ist.

Vorzugsweise ist die Druckerhöhungspumpe in Richtung von der Radbremse zu der zusätzlichen Hydraulikkammer nicht durchströmbar. Dadurch kann bei betätigter Bremsdruckgeberanordnung und nicht betätigter Druckerhöhungspumpe ein Bremsdruck in der Radbremse zeitweise konstant gehalten werden.

Desweiteren kann eine Ventilanordnung parallel zu der Druckerhöhungspumpe angeordnet sein, wobei in einer ersten Stellung der Ventilanordnung eine unmittelbare Verbindung zwischen der zusätzlichen Hydraulikkammer und der Radbremse besteht und in einer zweiten Stellung der Ventilanordung eine Verbindung zwischen der zusätzlichen Hydraulikkammer und der Radbremse nur über die Druckerhöhungspumpe besteht.

Dabei ist die Ventilanordnung in bevorzugter Weise so ausgelegt, daß die Ventilanordnung die erste Stellung federbetätigt als Grundstellung einnimmt und die zweite Stellung in Abhängigkeit von einem in der zusätzlichen Hydraulikkammer erzeugten Druck als Betätigungsstellung einnimmt.

Als Alternative kann vorgesehen werden, daß die Förderrichtung der Druckerhöhungspumpe umkehrbar ist, damit die Druckerhöhungspumpe auch in Richtung von der Radbremse zu der zusätzlichen Hydraulikkammer fördern kann. Hierdurch kann die parallel zu der Druckerhöhungspumpe angeordnete Ventilanordnung eingespart werden.

Zur Einsparung von Komponenten und somit Kosten wird entscheidend beigetragen, wenn eine Antiblockierregeleinrichtung zwischen der Bremsdruckgeberanordnung und der Radbremse angeordnet ist, wobei die Druckerhöhungspumpe Bestandteil der Antiblockierregeleinrichtung ist. Hierbei besteht in Bezug auf Einsparung von Einbauraum auch der Vorteil, daß die Bremsdruckgeberanordnung und die Antiblockierregeleinrichtung zu einer kompakten Baueinheit integriert werden können.

Um bei Betätigung des Bremspedals einen Vordruck an der Eingangseite der Druckerhöhungspumpe zu erzeugen, ist zwischen dem Druckspeicher der Antiblockierregeleinrichtung und der Eingangsseite der Druckerhöhungspumpe ein Rückschlagventil angeordnet, wobei das Rückschlagventil eine Strömungsverbindung nur in Richtung von dem Druckspeicher zu der Eingangsseite der Druckerhöhungspumpe zulässt.

Dabei kann parallel zu dem Rückschlagventil eine Drossel angeordnet sein, um das Pedalgefühl abzustimmen.

Damit mit der hydraulischen Bremsanlage auch eine Antriebsschlupfregelung durchgeführt werden kann, ist zwischen der Bremsdruckgeberanordnung und der Antiblockierregeleinrichtung bzw. der Radbremse ein Umschaltventil angeordnet, um eine Verbindung zwischen der Bremsdruckgeberanordnung und der Antiblockierregeleinrichtung bzw. der Radbremse herzustellen oder zu trennen.

Zur Vermeidung von Beschädigungen an der hydraulischen Bremsanlage bzw. deren Komponenten kann dabei parallel zu dem Umschaltventil ein Überdruckventil angeordnet sein.

Um den bei einer Fahrdynamikregelung erforderlichen schnellen Druckanstieg zur Vorladung der Druckerhöhungspumpe zu erzielen ist zwischen dem Reservoir und der zusätzlichen Hydraulikkammer eine Vorladeeinheit angeordnet, die mittels eines elektronisch steuerbaren Aktuators betätigbar ist.

Sollen sich mit der hydraulischen Bremsanlage auch Not- bzw. Zielbremsungen durchführen lassen, so kann zur Betätigung der Bremsdruckgeberanordnung anstelle oder zusätzlich zu einer Betätigung über das Bremspedal ein elektronisch steuerbarer Bremskraftverstärker vorgesehen sein.

Da die gesetzlichen Vorschriften eine zweifache Bremskreisaufteilung verlangen, weist die hydraulische Bremsanlage einen ersten und einen zweiten Bremskreis auf, wobei für den ersten und zweiten Bremskreis jeweils eine Bremsdruckgeberanordnung vorhanden ist.

In bevorzugter Weise sind dabei die für den ersten und zweiten Bremskreis jeweils vorgesehenen Bremsdruckgeberanordnungen parallel zueinander angeordnet und über das Bremspedal synchron betätigbar.

Um zu verhindern, daß bei Betätigung des Bremspedals Querkräfte auf die Bremsdruckgeberanordnungen übertragen werden, ist das Bremspedal mit einem Führungselement gekoppelt, das parallel zu den für den ersten und zweiten Bremskreis jeweils vorgesehenen Bremsdruckgeberanordnungen axial verschiebbar ist.

Damit bei Betätigung des Bremspedals gleiche Kraftanteile in die parallel zueinander angeordneten Bremsdruckgeberanordnungen eingeleitet werden, wird die über das Bremspedal eingeleitete Betätigungskraft über eine Waagebalkenanordnung in die für den ersten und zweiten Bremskreis jeweils vorgesehenen Bremsdruckgeberanordnungen eingeleitet.

Die Erfindung wird nachfolgend anhand der beigefügten, schematischen Zeichnungen näher erläutert. Es zeigt:
- Fig. 1: eine hydraulische Bremsanlage in einem unbetätigten Zustand,
- Fig. 2: eine alternative Ausführungsform einer hydraulischen Bremsanlage in einem betätigten Zustand,
- Fig. 3: eine um eine Antiblockierregeleinrichtung erweiterte hydraulische Bremsanlage,
- Fig. 4: eine um eine Antiblockier- und Antriebsschlupfregeleinrichtung erweiterte hydraulische Bremsanlage,
- Fig. 5: eine um eine Vorladeeinheit erweiterte hydraulische Bremsanlage nach Fig. 4,
- Fig. 6: eine um einen elektronisch steuerbaren Bremskraftverstärker erweiterte hydraulische Bremsanlage nach Fig. 3,
- Fig. 7: eine für zwei Bremskreise ausgelegte hydraulische Bremsanlage nach Fig. 3, und
- Fig. 8: eine alternative Ausführungsform einer für zwei Bremskreise ausgelegten hydraulischen Bremsanlage nach Fig. 3.

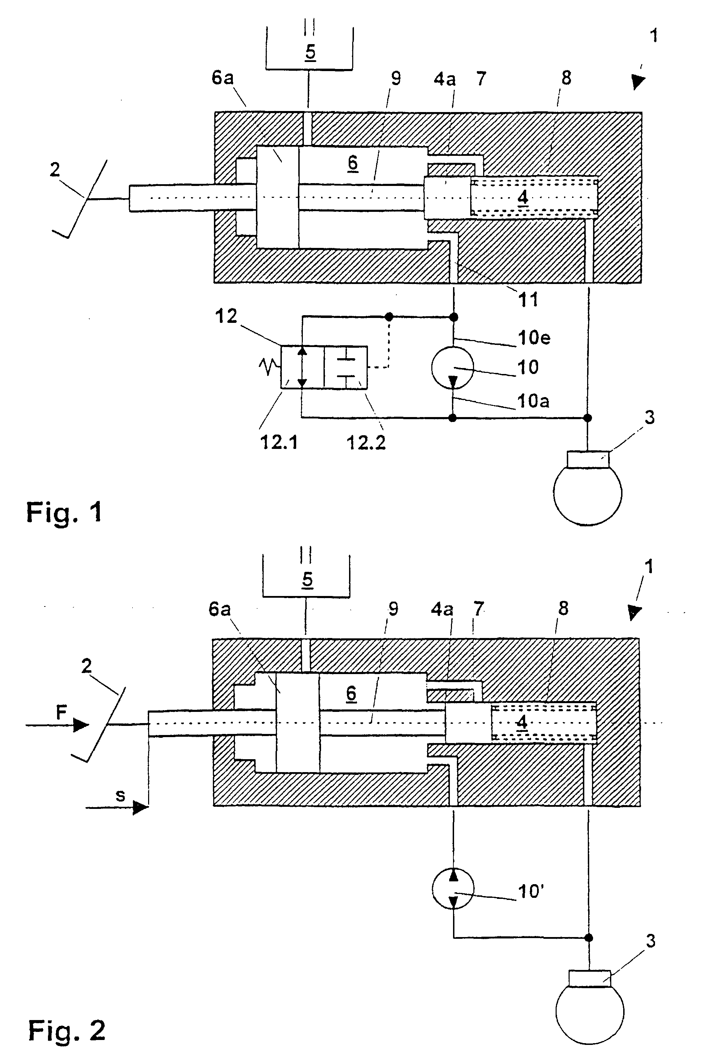

Die in Fig. 1 schematisch dargestellte hydraulische Bremsanlage weist eine Bremsdruckgeberanordnung 1 auf, die über ein Bremspedal 2 betätigbar ist, um einen Bremsdruck für eine Radbremse 3 zu erzeugen. Die Erzeugung des Bremsdruckes erfolgt in einer Hydraulikkammer 4, an die die Radbremse 3 angeschlossen ist.

Für die Versorgung mit Bremsfluid ist ein Reservoir 5 vorgesehen. Das Reservoir 5 ist mit einer zusätzlichen Hydraulikkammer 6 verbunden, welche über einen Kanal 7 mit der Hydraulikkammer 4 in Verbindung steht. Stattdessen kann das Reservoir 5 aber auch mit der Hydraulikkammer 4 verbunden sein, oder es können die zusätzliche Hydraulikkammer 6 und die Hydraulikkammer 4 mit dem Reservoir 5 verbunden sein, so daß der die Kammern 6, 4 verbindende Kanal 7 entfallen kann.

Zur Erzeugung des Bremsdruckes ist die Hydraulikkammer 4 auf einer Seite von einem axial verschiebbaren Kolben 4a begrenzt. Die Verschiebung des Kolbens 4a erfolgt bei Betätigung der Bremsdruckgeberanordnung 1 durch Einleitung einer Betätigungskraft F über das Bremspedal 2. Eine Federanordnung 8 wirkt der Verschiebung des Kolbens 4a bei Betätigung des Bremspedals 2 entgegen und bewirkt, daß die Bremsdruckgeberanordnung 1 im unbetätigten Zustand die in Fig. 1 dargestellte Grundstellung einnimmt. In dieser Grundstellung nimmt der Kolben 4a eine Position ein, in der der die Verbindung zur zusätzlichen Hydraulikkammer 6 herstellende Kanal 7 geöffnet ist, so daß die Hydraulikkammer 4 mit dem Reservoir 5 in Verbindung steht.

Wird die Bremsdruckgeberanordnung 1 in ihre in Fig. 2 gezeigte Betätigungsstellung überführt, so wird der Kanal 7 durch den Kolben 4a verschlossen und das Volumen der Hydraulikkammer 4 verkleinert, wodurch ein Bremsdruck p für die Radbremse 3 erzeugt wird. Der Bremsdruck p ergibt sich dabei in bekannter Weise in Abhängigkeit von der über das Bremspedal 2 eingeleiteten Betätigungskraft F und der Arbeitsfläche A₄ des Kolbens 4a (p = F / A₄). Da es sich bei der Arbeitsfläche A₄ des Kolbens 4 um einen bekannten, sich in der Regel nicht ändernden Systemparameter handelt, ist der für die Radbremse 3 erzeugte Bremsdruck p proportional zu der über das Bremspedal 2 eingeleiteten Betätigungskraft F (p ~ F).

Die bereits erwähnte zusätzliche Hydraulikkammer 6 wird auf ihren einen Seite von einem axial verschiebbaren weiteren Kolben 6a begrenzt, der über ein starres Verbindungsglied 9 mit dem Kolben 4a betrieblich gekoppelt ist. Die Kolben 6a, 4a werden deshalb bei Betätigung des Bremspedals synchron in axialer Richtung entgegen der Wirkung der Federanordnung 8 verschoben. Durch die betriebliche Kopplung der Kolben 6a, 4a bewirkt die Federanordnung 8, daß bei unbetätigtem Bremspedal 1 auch der weitere Kolben 6a seine Grundstellung einnimmt, in der die zusätzliche Hydraulikkammer 6 mit dem Reservoir 5 in Verbindung steht. Bezogen auf Fig. 1 bis 7 sei angemerkt, daß hier unter der Arbeitsfläche A₆ die Querschnittsfläche des weiteren Kolbens 6a abzüglich der Querschnittsfläche des Verbindungsglieds 9 und unter der Arbeitsfläche A₄ die Querschnittsfläche des Kolbens 4a zu verstehen sind.

Die zusätzliche Hydraulikkammer 6 steht über einen weiteren Kanal 11 in Verbindung mit der Eingangsseite 10e einer zur Druckerhöhung dienenden Hydraulikpumpe 10, deren Ausgangsseite 10a mit der Radbremse 3 bzw. der Hydraulikkammer 4 verbunden ist. Damit der weitere Kanal 11 eine Verbindung von der zusätzlichen Hydraulikkammer 6 zu der Pumpe 10 ständig herstellt, die Verbindung also beispielsweise bei einer Verschiebung des weiteren Kolbens 6a nicht abgesperrt werden kann, mündet der weitere Kanal 11 auf der dem weiteren Kolben 6a gegenüberliegenden Stirnseite in die zusätzliche Hydraulikkammer 6 ein.

Bei Betätigung des Bremspedals 2 wird durch den weiteren Kolben 6a auch die Verbindung von dem Reservoir 5 zu der zusätzlichen Hydraulikkammer 6 abgesperrt und das Volumen der zusätzlichen Hydraulikkammer 6 verkleinert. Das durch die Volumenverkleinerung verdrängte Bremsfluid wird mittels der Hydraulikpumpe 10 in die Radbremse 3 bzw. die Hydraulikkammer 4 gefördert und führt bei unveränderter Betätigungskraft F zu einer Erhöhung des Bremsdrucks p, oder - anders ausgedrückt - die über das Bremspedal 2 eingeleitete Betätigungskraft F wird verstärkt.

Dabei hängt das Maß der Verstärkung bzw. das Übersetzungsverhältnis grundsätzlich davon ab, wie sich bei Betätigung des Bremspedals 2 die Volumina der Hydraulikkammern 6, 4 im Verhältnis zueinander ändern. Um eine Verstärkung in der Grössenordnung allgemein bekannter (pneumatischer) Bremskraftverstärker zu erzielen, muss sich bei Betätigung des Bremspedals 2 das Volumen der Hydraulikkammer 4 in einem prozentual geringerem Maße als das Volumen der zusätzlichen Hydraulikkammer 6 verkleinern. Ausgehend von einer zylinderförmigen Gestalt der Hydraulikkammern 6, 4 und einer bei Betätigung des Bremspedals 2 synchronen Verschiebung der Kolben 6a, 4a um die gleiche Wegstrecke s in axialer Richtung, hängen die Volumina der Hydraulikkammern 6, 4 nur von den Arbeitsflächen A₆, A₄ der Kolben 6a, 4a ab. Dies bedeutet, daß die Arbeitsfläche A₆ des weiteren Kolbens 6a grösser sein muss als die Arbeitsfläche A₄ des Kolbens 4a, damit sich das Volumen der Hydraulikkammer 4 in einem prozentual geringerem Maße als das Volumen der zusätzlichen Hydraulikkammer 6 verkleinert. Dabei lässt sich das Maß der Verstärkung bzw. das Übersetzungsverhältnis i auf einfache Weise gemäss der Beziehung i = 1 + A₆ / A₄ bestimmen. Bei kompakten Abmessungen der Bremsdruckgeberanordnung 1, beispielsweise einem Durchmesser des Kolbens 4a von 10 mm, einem Durchmesser des weiteren Kolbens 6a von 24,5 mm sowie einem Durchmesser des Verbindungsglieds 9 von 4,5 mm, ergibt sich ein Übersetzungsverhältnis von i = 5. Für den Sonderfall, daß die Arbeitsflächen A₆, A₄ gleich gross sind (A₆ = A₄), gilt das Übersetzungsverhältnis von i = 2.

Der Antrieb der Hydraulikpumpe 10 könnte permanent erfolgen, wozu eine betriebliche Kopplung der Hydraulikpumpe 10 mit einem im Kraftfahrzeug ohnehin vorhandenen Antriebsaggregat denkbar wäre, was auf einfache Weise, beispielsweise mittels eines Antriebsriemens, realisierbar ist. Dabei würde funktionsgerecht bei unbetätigtem Bremspedal 2 in der Radbremse 3 kein Bremsdruck erzeugt, da in diesem Fall Bremsfluid aus der zusätzlichen Hydraulikkammer 6 über den weiteren Kanal 11 von der Hydraulikpumpe 10 über die Hydraulikkammer 4 und den Kanal 7 lediglich umgepumpt wird. Hingegen wird bei betätigtem Bremspedal 2 ein Bremsdruck p in der Radbremse 3 in der zuvor erläuterten Weise erzeugt, da in diesem Fall die Hydraulikkammern 6, 4 nicht miteinander in Verbindung stehen, so daß ein Umpumpen von Bremsfluid nicht möglich ist.

Allerdings ist es schon aus Gründen der Einsparung von Antriebsenergie besser, wenn die Hydraulikpumpe 10 nur bei einer Betätigung des Bremspedals 2 angetrieben wird. Üblicherweise ist für den Antrieb der Hydraulikpumpe 10 ein Elektromotor (nicht dargestellt) vorgesehen und es ist im Kraftfahrzeug ein sogenannter Bremslichtschalter (nicht dargestellt) vorhanden, der den Betätigungszustand des Bremspedals 2 als logisches Ein-/Aus-Signal erfasst. Somit ist es mittels einer elektronischen Steuereinheit (nicht dargestellt), die das Signal des Bremslichtschalters auswertet und ein Ansteuersignal für den Elektromotor bereitstellt, auf einfache Weise möglich, eine Ansteuerung des zum Antrieb der Hydraulikpumpe 10 dienenden Elektromotors (nicht dargestellt) immer dann vorzunehmen, wenn eine Betätigung des Bremspedals 2 erfolgt.

Auch kann vorgesehen sein, daß die elektronische Steuereinheit über das den Elektromotor ansteuernde Signal die Drehzahl des Elektromotors (nicht dargestellt) verändern kann, um die Förderleistung der Hydraulikpumpe 10 variabel einzustellen. Sind weiterhin anstelle oder zusätzlich zu dem Bremslichtschalter (nicht dargestellt) Sensormittel (nicht dargestellt) zur Erfassung einer mit der Betätigung des Bremspedals 2 in Beziehung stehenden Grösse vorgesehen, deren Ausgangssignal der elektronischen Steuereinheit zugeführt wird, so kann die Förderleistung der Hydraulikpumpe 10 in Abhängigkeit von der mit der Betätigung des Bremspedals 2 in Beziehung stehenden Grösse eingestellt werden. Dadurch wird das Regelverhalten der hydraulischen Bremsanlage in Bezug auf Pedalkomfort und Dosierbarkeit weiter verbessert. Als mit der Betätigung des Bremspedals 2 in Beziehung stehende Grösse wird in der Regel der Betätigungsweg oder die Betätigungsgeschwindigkeit des Bremspedals 2 oder die auf das Bremspedal 2 aufgebrachte Betätigungskraft sensiert.

Die Sensormittel (nicht dargestellt) zur Erfassung der mit der Betätigung des Bremspedals 2 in Beziehung stehenden Grösse können aber auch innerhalb der Bremsdruckgeberanordnung 1 angeordnet sein. So kann zum Beispiel die Wegstrecke s, um die sich die Kolben 6a, 4a bei Betätigung des Bremspedals 2 in axialer Richtung verschieben, als mit der Betätigung des Bremspedals 2 in Beziehung stehende Grösse erfasst werden. Da die Arbeitsfläche A₆ des Kolbens 6a eine bekannte, sich in der Regel nicht ändernde Systemgrösse ist, ist die bei Betätigung des Bremspedals 2 auftretende Veränderung des Volumens V₆ der zusätzlichen Hydraulikammer 6 proportional zu der Wegstrecke s, um die der weitere Kolben 6a axial verschoben wird (V₆ - s). Damit besteht die Möglichkeit, die Förderleistung der Hydraulikpumpe 10 in Abhängigkeit von der Veränderung des Volumens der zusätzlichen Hydraulikkammer 6 einzustellen, wodurch sich ein nahezu ideales Regelverhalten für die hydraulische Bremsanlage erzielen lässt.

Bei der in Fig. 1 gezeigten Ausführungsform ist die Hydraulikpumpe 10 nur für eine Förderrichtung ausgelegt, nämlich von der zusätzlichen Hydraulikkammer 6 hin zur Radbremse 3. Damit die Hydraulikpumpe 10 in umgekehrter Richtung, also von der Radbremse 3 zur zusätzlichen Hydraulikkammer 6, nicht durchströmbar ist, weist die Hydraulikpumpe 10 auf der Eingangs- und der Ausgangsseite 10e, 10a nicht dargestellte Rückschlagventile auf, die vorzugsweise in die Hydraulikpumpe 10 integriert sind. Damit wird erreicht, daß bei betätigter Bremsdruckgeberanordnung 1 und unbetätigter Hydraulikpumpe 10 - also bei nicht angesteuertem Elektromotor - der Bremsdruck p in der Radbremse zumindest zeitweise konstant gehalten werden kann.

Gemäss Fig. 1 ist parallel zur Hydraulikpumpe 10 eine Ventilanordnung 12 vorgesehen, die in eine erste Stellung 12.1 und eine zweite Stellung 12.2 bringbar ist. In der ersten Stellung 12.1 besteht eine unmittelbare Verbindung zwischen der zusätzlichen Hydraulikkammer 6 und der Radbremse 3, die Hydraulikpumpe 10 ist demzufolge überbrückt. In der zweiten Stellung 12.2 ist die unmittelbare Verbindung zwischen der zusätzlichen Hydraulikkammer 6 und der Radbremse 3 gesperrt, so daß eine Verbindung zwischen der zusätzlichen Hydraulikkammer 6 und der Radbremse 3 nur über die Hydraulikpumpe 10 besteht. Bei der ersten Stellung 12.1 handelt es sich um die Grundstellung, in die die Ventilanordnung 12 federnd vorgespannt ist, während es sich bei der zweiten Stellung 12.2 um die Betätigungsstellung handelt, die die Ventilanordnung 12 druckbetätigt einnimmt, wobei die Druckbetätigung in Abhängigkeit von einem in der zusätzlichen Hydraulikkammer 6 erzeugten Druck erfolgt.

Sobald bei einer Betätigung des Bremspedals 2 der in der zusätzlichen Hydraulikkammer 6 erzeugte Druck einen vorgegebenen Druckwert übersteigt, sperrt die Ventilanordnung 12 die unmittelbare Verbindung zwischen er zusätzlichen Hydraulikkammer 6 und der Radbremse 3, so daß Bremsfluid aus der zusätzlichen Hydraulikkammer 6 nur über das eigentliche Stellglied, nämlich die Hydraulikpumpe 10, in die Radbremse 3 gelangen kann. Dies ist insbesondere für die Realisierung der zuvor erwähnten Regelverhalten wichtig, bei denen die Förderleistung der Hydraulikpumpe 10 eingestellt wird.

Wird die Betätigung des Bremspedals 2 zurückgenommen, so fällt der Druck in der zusätzlichen Hydraulikkammer 6 ab und die Ventilanordnung 12 nimmt federbetätigt ihre Grundstellung 12.1 wieder ein. Somit kann Bremsfluid aus der Radbremse 3 nicht nur über die Hydraulikkammer 4 und den Kanal 7, sondern auch über den weiteren Kanal 11 in die zusätzliche Hydraulikkammer 6 und von dort in das Reservoir 5 zurückströmen. Damit wird vermieden, daß sich bei Zurücknahme der Betätigung des Bremspedals 2 der Bremsdruck p in der Radbremse 3 langsamer reduziert als er sich bei Betätigung des Bremspedals 2 in der Radbremse 3 aufbaut. Dies führt also zu einer nicht unwesentlichen Verbesserung des dynamischen Verhaltens der hydraulischen Bremsanlage. Idealerweise ist die Charakteristik der hydraulischen Bremsanlage so ausgelegt, daß die Zeitgradienten bei der Druckerhöhung und der Druckreduzierung gleich sind.

Die Ventilanordnung 12 hat folgenden weiteren Vorteil: Normalerweise steht die Förderleistung einer Hydraulikpumpe 10 erst nach einer bestimmten Anlaufphase zur Verfügung, während derer die Druckerzeugung an der Ausgangsseite 10a der Hydraulikpumpe 10 zeitlich verzögert einsetzt. Dieser Nachteil in Bezug auf die Leistungsfähigkeit der hydraulischen Bremsanlage lässt sich durch eine sogenannte Vorladung der Hydraulikpumpe 10 umgehen, indem während der Anlaufphase die Eingangsseite 10e der Hydraulikpumpe 10 mit Druck beaufschlagt wird. Dadurch, daß durch die Ventilanordnung 12 bei Betätigung des Bremspedals 2 die unmittelbare Verbindung zwischen der zusätzlichen Hydraulikkammer 6 und der Radbremse 3 gesperrt wird, erfolgt unmittelbar eine solche Vorladung der Hydraulikpumpe 10. Dieser Aspekt ist vor allem dann von Bedeutung, wenn der Antrieb zur Betätigung der Hydraulikpumpe 10 nicht ständig, sondern nur bei Betätigung des Bremspedals 2 erfolgt.

Alternativ kann die Ventilanordnung 12 anstelle der soeben beschriebenen druckgesteuerten Betätigung auch mit einer elektromagnetischen Betätigungseinrichtung ausgeführt sein. Das Ansteuersignal für die elektromagnetische Betätigungseinrichtung würde dann von der elektronischen Steuereinheit (nicht dargestellt) bereitgestellt und in Abhängigkeit vom Betätigungszustand des Bremspedals 2 erfolgen, der in der elektronischen Steuereinheit ohnehin ausgewertet wird.

Bei der in Fig. 2 gezeigten Ausführungsform ist die Hydraulikpumpe 10' für zwei Förderrichtungen ausgelegt, nämlich sowohl von der zusätzlichen Hydraulikkammer 6 zu der Radbremse 3, als auch von der Radbremse 3 zu der zusätzlichen Hydraulikkammer 6. Für die Umstellung der Förderrichtung kann ein reversierbarer Antrieb zur Betätigung der Hydraulikpumpe 10' vorgesehen werden. Falls wie üblich ein Elektromotor (nicht dargestellt) zum Antrieb der Hydraulikpumpe 10' vorgesehen ist, so muss dessen Drehrichtung reversierbar sein. Auch hier wird die entsprechende Ansteuerung von der elektronischen Steuereinheit bereitgestellt. Durch die Auslegung der Hydraulikpumpe 10' für die zwei Förderrichtungen wird gegenüber der in Fig. 1 gezeigten Ausführungsform die Ventilanordnung 12 eingespart.

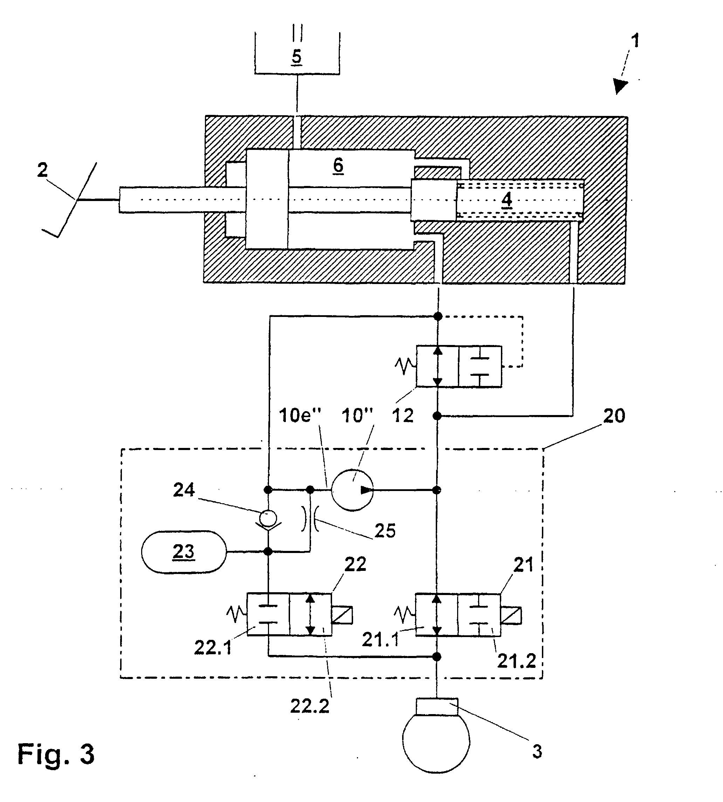

Die in Fig. 3 schematisch dargestellte hydraulische Bremsanlage ist gegenüber Fig. 1 um eine Antiblockierregeleinrichtung 20 erweitert, die zwischen der Bremsdruckgeberanordnung 1 und der Radbremse 3 angeordnet ist. Die Antiblockierregeleinrichtung 20 umfasst in bekannter Weise eine erste und zweite Ventileinrichtung 21, 22, um den Bremsdruck p in der Radbremse 3 durch Einstellung von Druckaufbau-, Druckhalte- sowie Druckabbauphasen modulieren zu können. Weiterhin umfasst die Antiblockierregeleinrichtung 13 einen Druckspeicher 23, auch Speicherkammer oder Expanderkammer genannt, in den während einer Druckabbauphase Bremsfluid von der Radbremse abgelassen wird, sowie eine Hydraulikpumpe 10'', um Bremsfluid von dem Druckspeicher 23 in die Bremsdruckgeberanordnung 1 bzw. die Radbremse 3 zurückzufördern. In der üblichen Weise sind die Ventileinrichtungen 21, 22 elektromagnetisch betätigbar und die Hydraulikpumpe 10'' ist von einem Elektromotor (nicht dargestellt) angetrieben, wobei die jeweiligen Ansteuersignale von einer elektronischen Steuereinheit (nicht dargestellt) bereitgestellt werden. Die elektronische Steuereinheit erfasst mittels nicht dargestellter Sensoren das Drehverhalten der den Radbremsen 3 zugeordneten Räder, um bei Erkennung einer Blockiertendenz an einem der Räder eine entsprechende Ansteuerung der Ventileinrichtungen 21, 22 sowie der Hydraulikpumpe 10" vorzunehmen. Die erste Ventileinrichtung 21 verbindet im nicht angesteuerten Zustand 21.1 die Bremsdruckgeberanordnung 1 mit der Radbremse 3 und die zweite Ventileinrichtung 22 sperrt im nicht angesteuerten Zustand 22 die Verbindung der Radbremse 3 mit dem Druckspeicher 23, so daß ein Bremsdruck p in der Radbremse 3 aufgebaut werden kann. Soll ein Bremsdruck in der Radbremse 3 konstant gehalten werden, so wird die erste Ventileinrichtung 21 in ihren angesteuerten Zustand 21.2 gebracht, in dem die Verbindung der Bremsdruckgeberanordnung 1 mit der Radbremse 3 gesperrt ist. Um einen Bremsdruck in der Radbremse 3 abzubauen, werden die erste und die zweite Ventileinrichtung 21, 22 in ihre angesteuerten Zustände 21.2, 22.2 gebracht, so daß die Verbindung der Bremsdruckgeberanordnung 1 mit der Radbremse 3 gesperrt und die Radbremse 3 mit dem Druckspeicher 23 verbunden ist. Erwähnt sei auch, daß die Antiblockierregeleinrichtung 20 statt mit zwei 2/2-Wegeventilen 21, 22 auch mit einem mechanischen Mengenregelventil anstelle des ersten 2/2-Wegeventils 21 oder einem elektromagnetisch betätigten 3/3-Wegeventil anstelle der beiden 2/2-Wegeventile 21, 22 ausgestaltet sein kann.

Wesentlich für die in Fig. 3 gezeigte hydraulische Bremsanlage ist, daß die Hydraulikpumpe 10'', die ohnehin Bestandteil der Antiblockierregeleinrichtung 20 ist, auch die Funktion der Hydraulikpumpe 10 gemäss Fig. 1 übernimmt, also die Verstärkung der über das Bremspedal 2 eingeleiteten Betätigungskraft F. Damit wird entscheidend zur Einsparung von Komponenten und somit Kosten beigetragen. Auch lassen sich die Bremsdruckgeberanordnung 1 und die Antiblockierregeleinrichtung 13 zu einer kompakten Baueinheit integrieren, was neben einer weiteren Kosteneinsparung vor allem eine nicht unerhebliche Einsparung von Einbauraum im Kraftfahrzeug bedeutet. Desweiteren entfallen durch die Integration die ansonsten notwendigen Verbindungsleitungen zwischen der Bremsdruckgeberanordnung 1 und der Antiblockierregeleinrichtung 20, wodurch das Risiko von Leckagen minimiert und die Systemsicherheit der hydraulischen Bremsanlage erhöht wird.

Damit bei Betätigung des Bremspedals 2 kein Bremsfluid von der zusätzlichen Hydraulikkammer 6 in den Druckspeicher 23 entweichen kann, sondern zur Vorladung unmittelbar der Eingangsseite 10e'' der Hydraulikpumpe 10'' zugeführt wird, ist zwischen der Eingangsseite 10e'' der Hydraulikpumpe 10'' und dem Druckspeicher 23 ein Rückschlagventil 24 angeordnet, das eine Strömungsverbindung nur in Richtung von dem Druckspeicher 23 zu der Eingangsseite 10e'' der Hydraulikpumpe 10'' zulässt.

Um den Komfort bzw. das Gefühl bei Betätigung des Bremspedals 2 optimal abzustimmen, kann parallel zu dem Rückschlagventil 24 zusätzlich eine Drossel 25 angeordnet werden, wie in Fig. 3 gezeigt ist. Entsprechend der Bemessung des Querschnitts der Drossel 25 strömt in diesem Fall bei Betätigung des Bremspedals 2 eine bestimmte Menge Bremsfluid von der zusätzlichen Hydraulikkammer 6 in den Druckspeicher 23, wodurch der Eingangsseite 10e'' der Hydraulikpumpe 10'' eine etwas geringere Menge Bremsfluid zur Vorladung zugeführt wird. Diese Alternative erfordert daher einen Kompromiss zwischen optimalem Pedalkomfort/-gefühl einerseits und maximaler Leistungsfähigkeit der hydraulischen Bremsanlage andererseits.

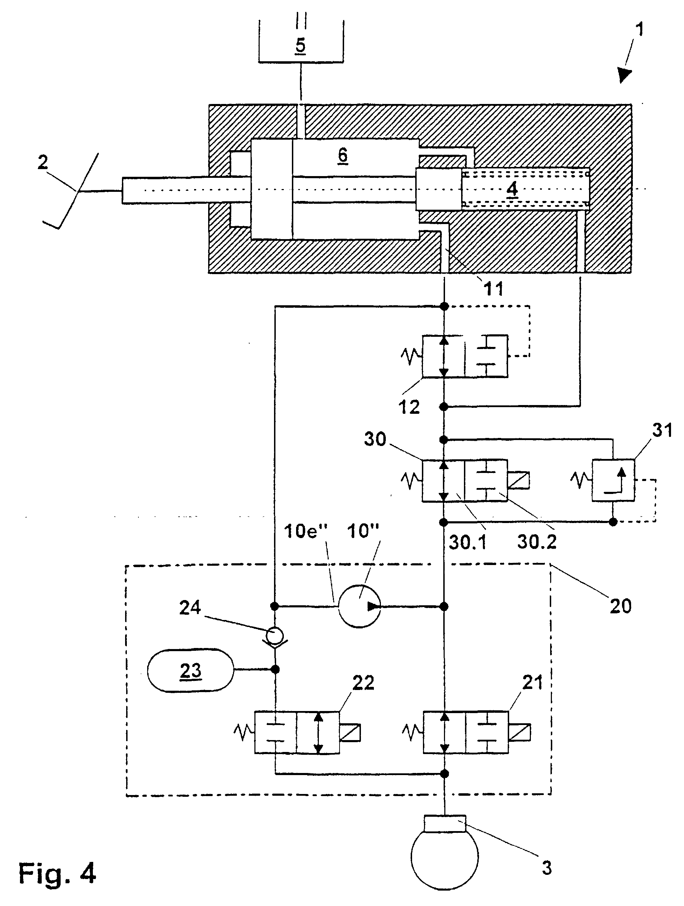

Ausgehend von Fig. 3 ist die in Fig. 4 dargestellte hydraulische Bremsanlage zur Durchführung einer Antriebsschlupfregelung erweitert. Dazu ist zwischen der Bremsdruckgeberanordnung 1 und der Antiblockierregeleinrichtung 20 bzw. der Radbremse 3 ein Umschaltventil 30 angeordnet. Das Umschaltventil 30 ist elektromagnetisch betätigt, wobei das Ansteuersignal wiederum von der nicht dargestellten elektronischen Steuereinheit bereitgestellt wird. Im nicht angesteuerten Zustand 30.1 verbindet das Umschaltventil 30 die Hydraulikkammer 4 der Bremsdruckgeberanordnung 1 unmittelbar mit der Antiblockierregeleinrichtung 20 bzw. der Radbremse 3, so daß normale Bremsungen sowie blockiergeschützte Bremsungen in der zuvor erläuterten Weise möglich sind. Soll eine Antriebsschlupfregelung durchgeführt werden nachdem eine Durchdrehtendenz an einem der Radbremse 3 zugeordneten angetriebenen Räder erkannt wurde, so wird das Umschaltventil 30 zunächst in den angesteuerten Zustand 30.2 gebracht, wodurch die Verbindung zwischen der Bremsdruckgeberanordnung 1 und der Antiblockierregeleinrichtung 20 bzw. der Radbremse 3 gesperrt ist. Gleichzeitig wird mittels der Hydraulikpumpe 10" ein Bremsdruck in der Radbremse 3 aufgebaut, um der Durchdrehtendenz entgegenzuwirken. Hierzu entnimmt die Hydraulikpumpe 10'' Bremsfluid aus dem Reservoir 5 über die zusätzliche Hydraulikkammer 6 und den weiteren Kanal 11, was möglich ist, da bei einer Antriebsschlupfregelung keine Betätigung des Bremspedals 2 erfolgt.

Parallel zu dem Umschaltventil 30 ist ein Überdruckventil 31 angeordnet, das während einer Antriebsschlupfregelung, also dann, wenn sich das Umschaltventil 30 im angesteuerten Zustand 30.2 befindet, eine Verbindung der Radbremse 3 zur Hydraulikkammer 4 der Bremsdruckgeberanordnung 1 herstellt, sobald der Bremsdruck in der Radbremse 3 einen vorgegebenen Druckwert übersteigt. Damit werden Beschädigungen an der hydraulischen Bremsanlage bzw. deren Komponeneten durch zu hohe Drücke verhindert.

Ausgehend von der in Fig. 3 dargestellten hydraulischen Bremsanlage mit Antiblockierregeleinrichtung erfordert die Erweiterung auf die in Fig. 4 dargestellte hydraulische Bremsanlage mit Antiblockier- und Antriebsschlupfregeleinrichtung zusätzlich also nur die Verwendung des Umschaltventils 30 (bzw. des dazu parallel angeordneten Überdruckventils 31), so daß die Erweiterung einen verhältnismässig geringen Aufwand verursacht.

Bei dieser hydraulischen Bremsanlage besteht eine ständige Verbindung von der Bremsdruckgeberanordnung 1 bzw. der zusätzlichen Hydraulikkammer 6, die bei unbetätigtem Bremspedal 2 mit dem Reservoir 5 verbunden ist, zur Eingangsseite 10e'' der Hydraulikpumpe 10''. Dagegen erfordert bei einer konventionellen blockiergeschützten Bremsanlage die Erweiterung auf eine Antriebsschlupfregeleinrichtung nicht nur ein Umschaltventil zwischen der Bremsdruckgeberanordnung und der Antiblockierregeleinrichtung bzw. der Radbremse, sondern auch ein weiteres Umschaltventil sowie eine zusätzliche Verbindungsleitung, damit eine Verbindung der Eingangsseite der Hydraulikpumpe mit der Bremsdruckgeberanordnung bzw. dem Reservoir hergestellt werden kann.

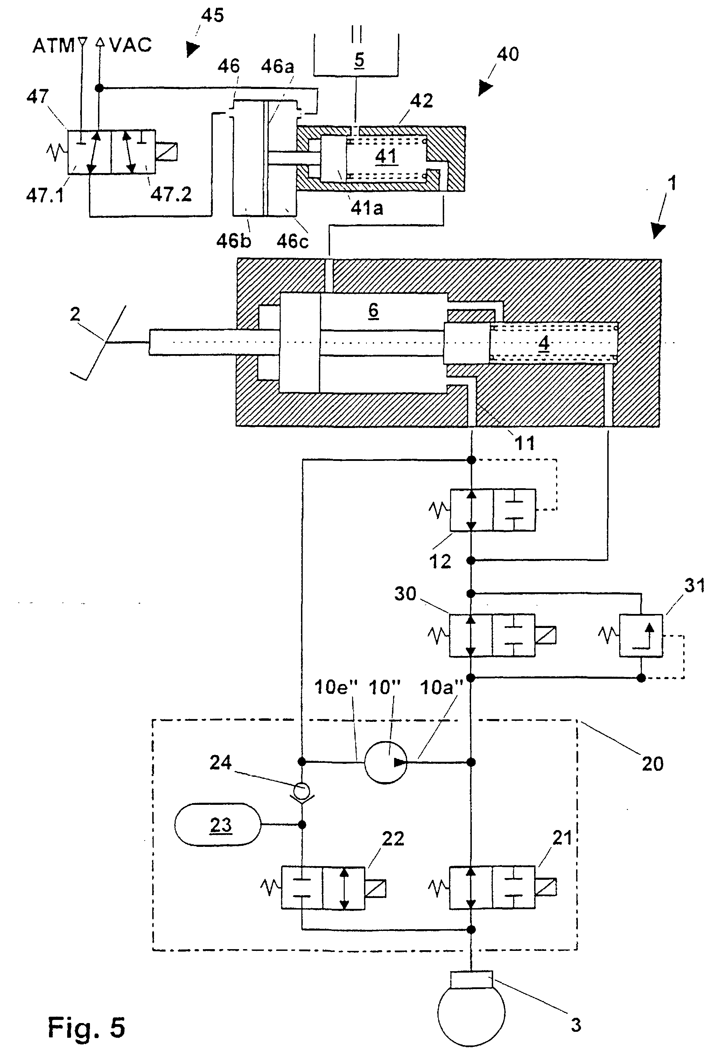

Die in Fig. 5 gezeigte hydraulische Bremsanlage ist ausgehend von der in Fig. 4 gezeigten hydraulischen Bremsanlage um eine Vorladeeinheit 40 erweitert. Die Vorladeeinheit 40 ist zwischen dem Reservoir 5 und der zusätzlichen Hydraulikkammer 6 angeordnet. Mittels der Vorladeeinheit 40 ist es bei unabhängig von einer Betätigung des Bremspedals 2 erfolgenden Bremsungen möglich, beispielsweise bei einer Antriebsschlupfregelung oder einer Fahrdynamikregelung, einen Vordruck an der Eingangsseite 10e'' der Hydraulikpumpe 10'' zu erzeugen. Damit wird, ähnlich wie im Zusammenhang mit der Ventilanordnung 12 sowie dem Rückschlagventil 24 zuvor erläutert, ein schnellerer Druckanstieg an der Ausgangsseite 10a'' der Hydraulikpumpe 10'' während der Anlaufphase der Hydraulikpumpe 10'' erzielt. Dies ist insbesondere für die Leistungsfähigkeit der hydraulischen Bremsanlage bei einer Fahrdynamikregelung sehr wichtig, bei der zwar nicht unbedingt hohe Drücke, dafür aber sehr kurze Druckanstiegszeiten bei der Vorladung der Pumpe erforderlich sind, um die Fahrstabilität des Kraftfahrzeugs beispielsweise beim Durchfahren einer Kurve aufrechtzuerhalten.

Die Vorladeeinheit 40 weist eine Druckkammer 41 auf, die auf einer Seite von einem axial verschiebbaren Kolben 41a begrenzt wird. Eine Federanordnung 42 wirkt der Verschiebung des Kolbens 41a entgegen und bewirkt, daß die Vorladeeinheit 40 im unbetätigten Zustand die in Fig. 4 gezeigte Grundstellung einnimmt. In der Grundstellung nimmt der Kolben 41a eine Position ein, in der die Druckkammer 41 mit dem Reservoir 5 in Verbindung steht. Bei Betätigung der Vorladeeinheit 40 wird der Kolben 41a entgegen der Feder 42 axial verschoben, wobei die Verbindung zwischen der Druckkammer 41 und dem Reservoir getrennt wird, so daß das Bremsfluid in der Druckkammer 41 unter Druck gesetzt wird. Da eine Betätigung der Vorladeeinheit 40 nur bei nicht betätigtem Bremspedal 2 erfolgt, besteht über die zusätzliche Hydraulikkammer 6 und den weiteren Kanal 11 eine Verbindung von der Druckkammer 41 zur Eingangsseite 10e'' der Hydraulikpumpe 10'', um diese für die Vorladung mit Bremsfluid zu versorgen.

Zur Betätigung der Vorladeeinheit 40 ist hier ein elektronisch steuerbarer Aktuator 45 vorgesehen. Der elektronisch steuerbare Aktuator 45 umfasst ein Gehäuse 46, das von einer beweglichen Wand 46a in eine Druckkammer 46b und eine Vakuumkammer 46c unterteilt ist, wobei die bewegliche Wand 46a mit dem Kolben 41a betrieblich gekoppelt ist. Die Vakuumkammer 46c ist stets an eine nicht näher dargestellte Vakuumquelle VAC angeschlossen, während die Druckkammer 46b mittels eines elektromagnetisch betätigten Drei/Zwei-Wegeventils 47 entweder mit der Vakuumquelle VAC oder mit dem Atmosphärendruck ATM verbindbar ist. Das Ansteuersignal für das elektromagnetisch betätigte Drei/Zwei-Wegeventil 47 wird wie bei den Ausführungen zuvor von der elektronischen Steuereinheit (nicht dargestellt) bereitgestellt. Wenn sich das Drei/Zwei-Wegeventil 47 im nicht angesteuerten Zustand 47.1 befindet, nimmt die Vorladeeinheit 40 die in Fig. 5 gezeigte Grundstellung ein, in der die beiden Kammern 46b, 46c mit der Vakuumquelle VAC verbunden sind, so daß keine Druckdifferenz an der beweglichen Wand 46a wirksam ist und die Federanordnung 42 einer Verschiebung des Kolbens 41a entgegenwirkt. Wird das Drei/Zwei-Wegeventil 47 in den angesteuerten Zustand 47.2 überführt, so wird die Druckkammer 46b mit dem Atmosphärendruck ATM verbunden, so daß eine Druckdifferenz an der beweglichen Wand 46a wirksam wird, unter der der Kolben 41a entgegen der Federanordnung 42 verschoben wird, wodurch eine Betätigung der Vorladeeinheit 40 erfolgt.

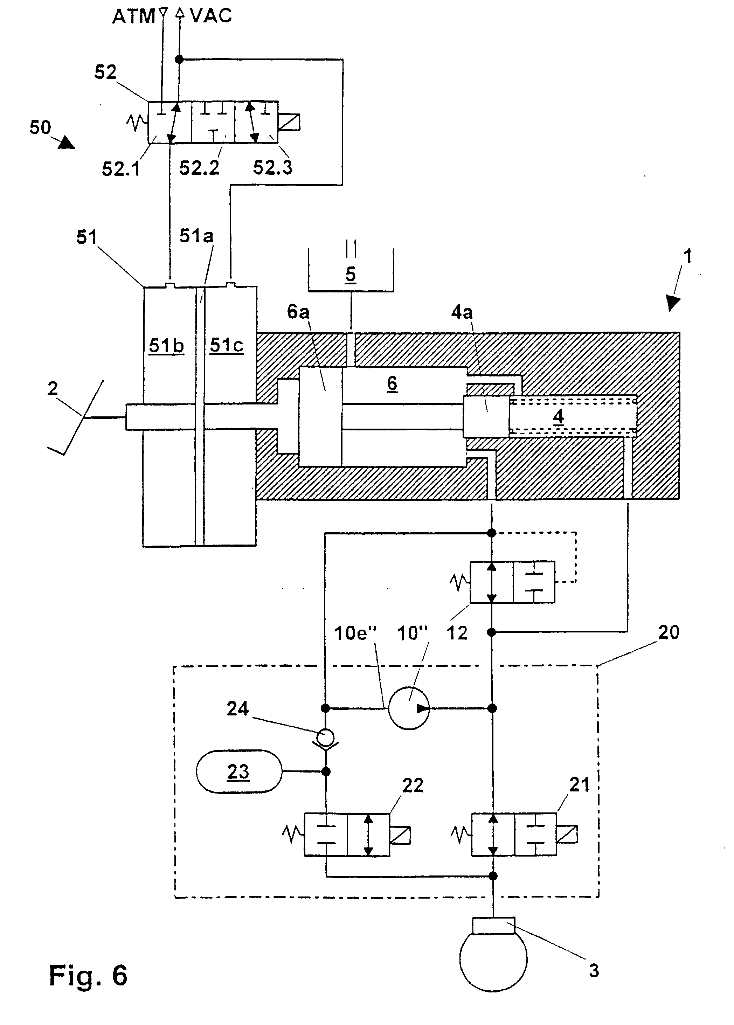

Bei der in Fig. 6 gezeigten hydraulischen Bremsanlage ist die in Fig. 3 gezeigte hydraulische Bremsanlage mit Antibiockierregeleinrichtung um einen elektronisch steuerbaren Bremskraftverstärker 50 erweitert. Der elektronisch steuerbare Bremskraftverstärker 50 ermöglicht es, die Bremsdruckgeberanordnung 1 anstelle oder zusätzlich zu einer Betätigung über das Bremspedal 2 zu betätigen. Das heisst zum einen, daß bei Betätigung der Bremsdruckgeberanordnung 1 "anstelle" einer Betätigung über das Bremspedal 2 Bremsungen wie zum Beispiel Antriebsschlupfregelung, Fahrdynamikregelung oder Abstandsregelung möglich sind, und zum anderen, daß bei Betätigung der Bremsdruckgeberanordnung 1 "zusätzlich zu" einer Betätigung über das Bremspedal 2 beispielsweise eine Not- bzw. Zielbremsung eingeleitet werden kann. Zu erwähnen ist auch, daß bei der hydraulischen Bremsanlage gemäss Fig. 6 im Vergleich zu den hydraulischen Bremsanlagen gemäss Fig. 4 und 5 das Umschaltventil 30 (bzw. das dazu parallel angeordnete Überdruckventil 31) eingespart wird, so daß sich der höhere Aufwand für den elektronisch steuerbaren Bremskraftverstärker 50 wieder relativiert. Funktional betrachtetet ist dabei aber zu berücksichtigen, daß mit den in Fig. 4 und 5 gezeigten hydraulischen Bremsanlagen keine Not- bzw. Zielbremsungen durchführbar sind.

Der Aufbau und die Funktionsweise des elektronisch steuerbaren Bremskraftverstärkers 50 ist prinzipiell gleich dem des elektronisch steuerbaren Aktuators 45 nach Fig. 5. So weist der elektronisch steuerbare Bremskraftverstärker 50 ein Gehäuse 51 auf, das von einer beweglichen Wand 51a in eine Druckkammer 51b und eine Vakuumkammer 51c unterteilt ist, wobei die bewegliche Wand 51a eine betriebliche Kopplung zu den Kolben 6a, 4a der Bremsdruckgeberanordnung 1 aufweist. Ebenso ist die Vakuumkammer 51c stets an eine nicht näher dargestellte Vakuumquelle VAC angeschlossen, während die Druckkammer 51b mittels eines elektromagnetisch betätigten Drei/Drei-Wegeventils 52, dessen Ansteuerung ebenfalls von der elektronischen Steuereinheit (nicht dargestellt) erfolgt, je nach Stellung mit der Vakuumquelle VAC (Grundstellung 52.1) verbunden oder abgesperrt (Betätigungsstellung 52.2) oder mit dem Atmosphärendruck ATM (Betätigungsstellung 52.3) verbunden werden kann. In der Grundstellung 52.1 wird eine Druckdifferenz an der beweglichen Wand 51a abgebaut bzw. reduziert, während in der Betätigungsstellung 52.3 eine Druckdifferenz an der beweglichen Wand 51a aufgebaut bzw. erhöht wird. Aufgrund der zusätzlichen Betätigungsstellung 52.2 ist es bei dem elektronisch steuerbaren Bremskraftverstärker 50 im Vergleich zu dem elektronisch steuerbaren Aktuator 45 gemäss Fig. 5 möglich, eine an der beweglichen Wand 51a anstehende Druckdifferenz für eine bestimmte Zeitdauer konstant zu halten, so daß sich die vom elektronisch steuerbaren Bremskraftverstärker 50 aufzubringende Betätigungskraft bzw. der durch ihn erzeugte Betätigungskraftanteil auf komfortable Weise steuern lässt.

Bei dem elektronisch steuerbaren Aktuator 45 (Fig. 5) sowie dem elektronisch steuerbaren Bremskraftverstärker 50 (Fig. 6) wurden vorstehend als Beispiel pneumatische Typen betrachtet, für die im Kraftfahrzeug eine Vakuumquelle bereitzustellen ist. Die Ausführungsformen der erfindungsgemässen hydraulischen Bremsanlage nach Fig. 1 bis 4 weisen jedoch im Vergleich zu einer konventionellen Bremsanlage den grossen Vorteil auf, daß keine Vakuumquelle benötigt wird. Damit dieser Vorteil auch auf die Ausführungsformen nach Fig. 5 und 6 zutrifft, besteht selbstverständlich die Alternative, den elektronisch steuerbaren Aktuator 45 (Fig. 5) sowie den elektronisch steuerbaren Bremskraftverstärker 50 (Fig. 6) beispielsweise als rein elektromagnetische, elektrohydraulische, elektromechanische oder elektromotorische Betätigungseinheiten auszuführen, für die keine Vakuumquelle erforderlich ist.

Sofern der elektronisch steuerbare Bremskraftverstärker 50 (Fig. 6) dennoch als pneumatischer Typ ausgeführt wird, so besteht im Vergleich zu einer konventionellen Bremsanlage immer noch der Vorteil, daß Einbauraum und Kosten eingespart werden können. Da ein elektronisch steuerbarer Bremskraftverstärker bei Verwendung in einer hydraulischen Bremsanlage nach Fig. 6 nur eine Betätigungskraft bzw. einen Betätigungskraftanteil in der Grössenordnung von 20 Prozent derjenigen einer konventionellen Bremsanlage aufbringen muss, ist ein einfacher Verstärker mit einem Durchmesser von 152,4mm (6 Zoll) für ein Kraftfahrzeug ausreichend, das bei einer konventionellen Bremsanlage mit einem Tandemverstärker eines Durchmessers von 203,2 bis 228,6 mm (8 bis 9 Zoll) ausgerüstet werden müsste. Weil ein erheblich "schwächerer" Bremskraftverstärker ausreicht, kann auch die Vakuumquelle "schwächer" und insofern einfacher und mit einem geringeren Aufwand ausgestaltet sein. Bei einem mit Ottomotor ausgerüsteten Kraftfahrzeug wird sich in diesem Fall sogar das prinzipbedingt im Ansaugtrakt erzeugte Vakuum in unkritischer Weise nutzen lassen.

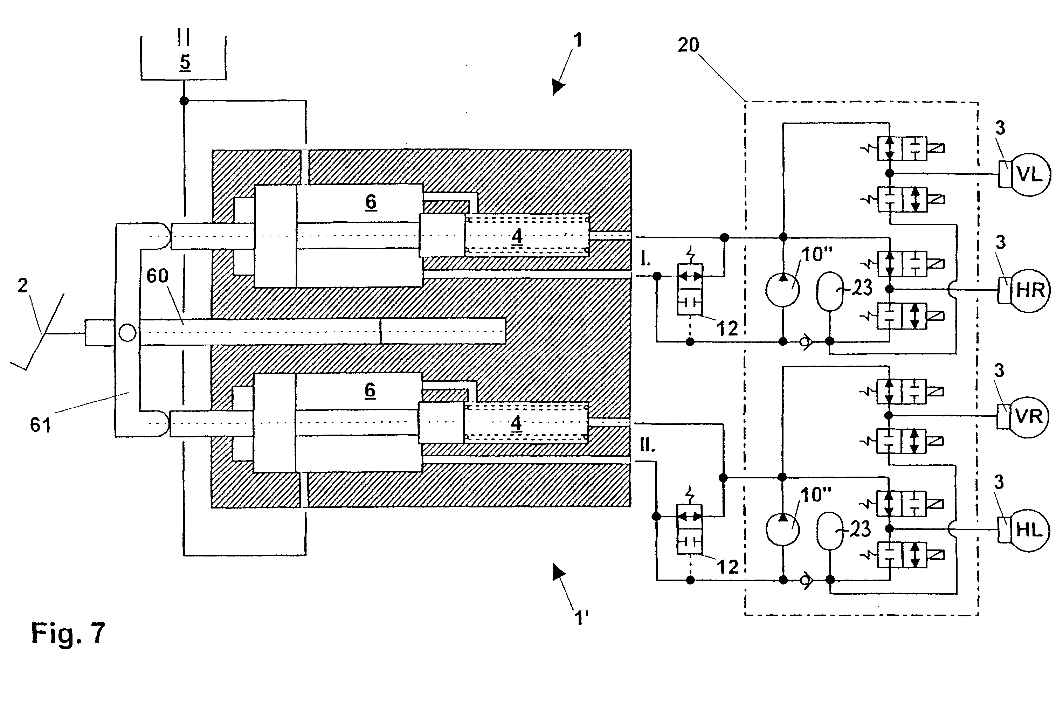

In Fig. 7 ist eine erfindungsgemässe hydraulische Bremsanlage mit einer Antiblockierregeleinrichtung 20 für einen ersten und zweiten Bremskreis I., II. dargestellt. Um eine vorteilhafte diagonale Bremskreisaufteilung zu erreichen, wirkt der erste Bremskreis I. auf die dem linken Vorderrad VL und dem rechten Hinterrad HR des Kraftfahrzeugs zugeordneten Radbremsen 3, während der zweite Bremskreis II. auf die dem rechten Vorderrad VR und dem linken Hinterrad HL des Kraftfahrzeugs zugeordneten Radbremsen 3 wirkt. Selbstverständlich wäre auch eine sogenannte schwarzweisse Bremskreisaufteilung möglich, beispielsweise indem der erste Bremskreis I. auf die den Rädern der Vorderachse VL, VR zugeordneten Radbremsen 3 und der zweite Bremskreis II. auf die den Rädern der Hinterachse HL, HR zugeordneten Radbremsen 3 wirken würde.

Zur Erzeugung des Bremsdruckes p in den Bremskreisen I., II. ist für den ersten und zweiten Bremskreis I., II. jeweils eine Bremsdruckgeberanordnung 1, 1' vorgesehen. Da die Antiblockierregeleinrichtung 20 in bekannter Weise auch für jeden Bremskreis I., II. jeweils eine Hydraulikpumpe 10'' aufweist, können diese, wie bereits im Zusammenhang mit Fig. 3 erläutert, für die Verstärkung der über das Bremspedal 2 eingeleiteten Betätigungskraft F in den Bremsdruckgeberanordnungen 1, 1' eingesetzt werden.

Die Bremsdruckgeberanordnungen 1, 1' sind parallel zueinander angeordnet und somit über das Bremspedal 2 synchron betätigbar. Diese sogenannte Twinanordnung hat gegenüber einer seriellen Anordnung, wie beispielsweise bei einem Tandemhauptzylinder, den Vorteil, daß in den Bremskreisen keine durch Gleitreibungsverluste der Kolben bedingte, voneinander abweichende Bremsdrücke auftreten können. Bei einer konventionellen Bremsanlage mit einem herkömmlichen Hauptbremszylinder, der zwei seriell angeordnete Kolben aufweist, ist dies normalerweise nicht als besonders kritisch anzusehen. Da eine Ausgestaltung der dargestellten hydraulischen Bremsanlage als Tandemanordnung insgesamt vier seriell angeordnete Kolben aufweisen würde, könnten sich die Gleitreibungsverluste jedoch als kritisch erweisen. Dies insbesondere deshalb, da in der zusätzlichen Hydraulikkammer 6 ein verhältnismässig kleines Druckniveau eingestellt wird, wodurch sich Druckunterschiede in einem prozentual stärkerem Maße nachteilig auswirken. Somit ist in Bezug auf die dargestellte hydraulische Bremsanlage die Twinanordnung vorteilhafter.

Um zu verhindern, daß bei Betätigung des Bremspedals 2 Querkräfte auf die für den ersten und zweiten Bremskreis I., II. jeweils vorgesehenen Bremsdruckgeberanordnungen 1, 1' übertragen werden, die möglicherweise zu einem Verklemmen der Kolben 6a, 4a und somit zu einer Funktionsbeeinträchtigung der hydraulischen Bremsanlage führen könnten, ist das Bremspedal 2 mit einem Führungselement 60 gekoppelt, das parallel zu den für den ersten und zweiten Bremskreis I., II. jeweils vorgesehenen Bremsdruckgeberanordnungen 1, 1' axial verschiebbar ist. Als Führungselement 60 kommt, wie in Fig. 7 schematisch dargestellt, zum Beispiel eine Führungsstange in Betracht, die in einer zylindrischen Bohrung des Gehäuses der Bremsdruckgebereinheit axial verschiebbar aufgenommen ist.

Eine Waagebalkenanordnung 61 ist dazu vorgesehen, bei Einleitung einer Betätigungskraft F über das Bremspedal nicht nur eine synchrone Betätigung der für den ersten und zweiten Bremskreis I., II. jeweils vorgesehenen Bremsdruckgeberanordnungen 1, 1' sicherzustellen, sondern auch die über das Bremspedal 2 eingeleitete Betätigungskraft F von dem Führungselement 60 zu gleichen Kraftanteilen in die jeweiligen Bremsdruckgeberanordnungen 1, 1' einzuleiten, damit sich in den beiden Bremskreisen I., II. ein identischer Bremsdruck einstellt.

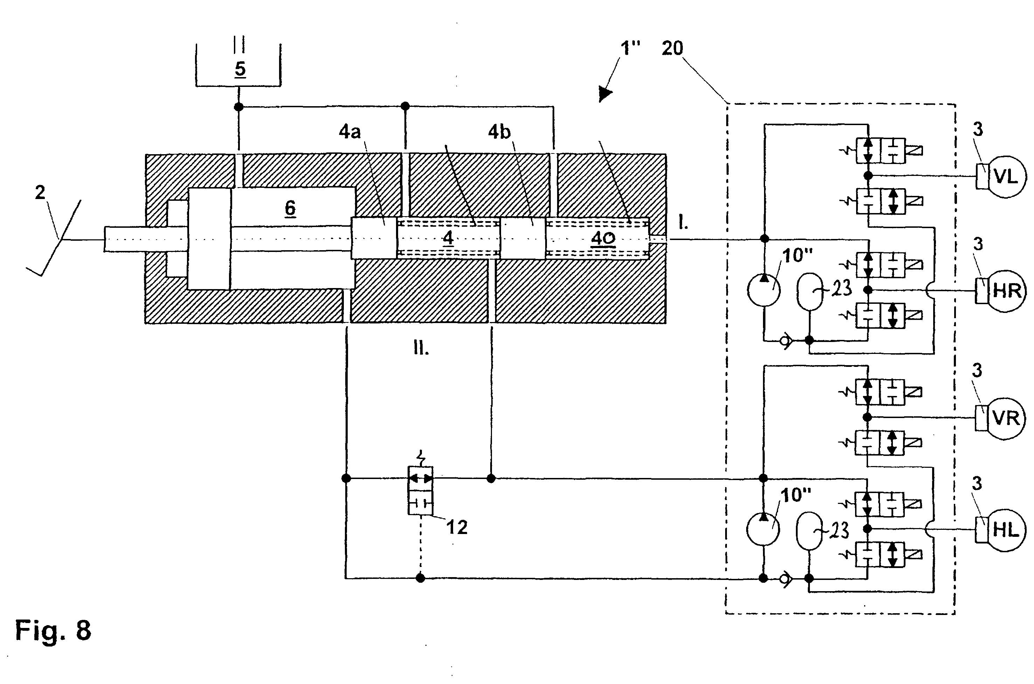

In Fig. 8 ist eine alternative Ausführungsform einer erfindungsgemässen hydraulischen Bremsanlage mit einer Antiblockierregeleinrichtung 20 für einen ersten und zweiten Bremskreis I., II. dargestellt. Ebenso wie in Fig. 7 wirkt der erste Bremskreis I. auf die Radbremsen 3 vorne links und hinten rechts, während der zweite Bremskreis II. auf die Radbremsen 3 vorne rechts und hinten links wirkt.

Im Unterschied zum Ausführungsbeispiel gemäß Fig. 7 umfaßt die in Fig. 8 dargestellte Bremsanlage eine Bremsdruckgeberanordnung 1", die im Prinzip mit der Bremsdruckgeberanordnung 1 aus Fig. 1 übereinstimmt, jedoch um eine zweite Hydraulikkammer 40 ergänzt ist, die in Serie mit der Hydraulikkammer 4 geschaltet ist. Wie aus Fig. 8 ersichtlich, werden die beiden Hydraulikkammern 4 und 40 durch einen in einer Bohrung der Bremsdruckgeberanordnung 1" axial abdichtend und verschieblich angeordneten Schwimmkolben 4b voneinander getrennt. Eine Federanordnung 40 stützt sich am Boden der Bohrung ab und spannt den Schwimmkolben 4b in seine in Fig. 8 wiedergegebene Ruhe- bzw. Ausgangsstellung vor. Die Federanordnung stützt sich bei diesem Ausführungsbeispiel auf der anderen Seite des Schwimmkolbens 4b ab.

Nach Einleiten einer Betätigungskraft F wird, hervorgerufen durch die Verschiebung der beiden Kolben 4a und 4b, dem ersten Bremskreis I. Bremsdruck aus der zweiten Hydraulikkammer 40 zugeführt, während dem zweiten Bremskreis II. Bremsdruck aus der ersten Hydraulikkammer 4 zugeführt wird. Der Ausgang der zusätzlichen Hydraulikkammer 6 steht in diesem Zustand - wie in Fig. 1 - in Fluidverbindung mit dem Ausgang der Hydraulikkammer 4 und der Eingangsseite der einen in Fig. 8 dargestellten Druckerhöhungspumpe 10". Über den Schwimmkolben 4b wird der mittels der Druckerhöhungspumpe 10" erhöhte Bremsfluiddruck auch auf das in der zweiten Hydraulikkammer 40 befindliche Bremsfluid übertragen, so daß allen Radbremsen 3 der verstärkte Bremsfluiddruck zugeführt werden kann. Die zweite, in Fig. 8 obere Pumpe 10" dient in diesem Fall nur der Rückförderung von Bremsfluid. Alternativ kann die in Fig. 8 wiedergegebene Bremsanlage so abgewandelt werden, daß während einer Betätigung der Bremsdruckgeberanordnung 1" der Ausgang der zusätzlichen Hydraulikkammer 6 auch in Fluidverbindung mit der Eingangsseite der oberen Pumpe 10" steht, die dann ebenfalls als Druckerhöhungspumpe wirkt.

Das in Fig. 8 dargestellte Ausführungsbeispiel gestattet die Verwendung eines herkömmlichen, mit zwei in Serie geschalteten Hydraulikkammern versehenen Hauptzylinders, wie er üblicherweise bei Zweikreisbremsanlagen eingesetzt wird. Ein solcher Hauptzylinder muß lediglich um die zusätzliche Hydraulikkammer 6 ergänzt werden, die den beiden Hydraulikkammern 4 und 40 wie dargestellt vorgeschaltet sein kann. Ein solcher Aufbau ergibt eine besonders kompakte Bremsdruckgeberanordnung 1". Da nur eine zusätzliche Hydraulikkammer 6 erforderlich ist, treten auch keine sich nachteilig auswirkenden Druckunterschiede zwischen den einzelnen Bremskreisen auf.

## Patentansprüche

1. Bremsdruckgeberanordnung (1, 1', 1") für eine hydraulische Kraftfahrzeugbremsanlage, die nach Einleiten einer Betätigungskraft (F) über ein Eingangsglied (2) durch Verkleinern des Volumens einer mit Bremsfluid zu füllenden Hydraulikkammer (4) an einem Ausgang derselben einen Bremsdruck für zumindest eine Radbremse (3) bereitstellt, wobei eine Hilfs-Hydraulikkammer (6) für Bremsfluid vorhanden ist, deren Volumen sich nach Einleiten der Betätigungskraft (F) ebenfalls verkleinert, und wobei ein Ausgang der Hilfs-Hydraulikkammer (6) in Fluidverbindung mit der Eingangsseite (10e) einer Druckerhöhungspumpe (10, 10', 10") steht,
**dadurch gekennzeichnet, daß**
- die Druckerhöhungspumpe (10, 10', 10") Bremsfluid in Richtung von der Hilfs-Hydraulikkammer (6) zu der genannten, zumindest einen Radbremse (3) fördert, und daß
- die Ausgangsseite (10a) der Druckerhöhungspumpe (10, 10', 10") in Fluidverbindung mit dem Ausgang der Hydraulikkammer (4) steht, so daß für die genannte, zumindest eine Radbremse (3) ein verstärkter Bremsdruck bereitgestellt wird.

2. Bremsdruckgeberanordnung nach Anspruch 1,
**gekennzeichnet durch** eine zweite mit Bremsfluid zu füllende Hydraulikkammer (40), die in Serie mit der Hydraulikkammer (4) geschaltet ist und deren Volumen sich nach Einleiten der Betätigungskraft (F) ebenfalls verkleinert, um an einem Ausgang derselben einen Bremsdruck für zumindest eine weitere Radbremse (3) bereitzustellen.

3. Bremsdruckgeberanordnung nach Anspruch 1 oder 2,
**dadurch gekennzeichnet, daß** bei unbetätigter Bremsdruckgeberanordnung (1, 1', 1") jede Hydraulikkammer (4, 40) und die Hilfs-Hydraulikkammer (6) in Fluidverbindung mit einem Reservoir (5) für Bremsfluid sind und daß bei betätigter Bremsdruckgeberanordnung (1, 1', 1") die Fluidverbindung zwischen dem Reservoir (5) für Bremsfluid und jeder Hydraulikkammer (4, 40) sowie der Hilfs-Hydraulikkammer (6) unterbrochen ist.

4. Bremsdruckgeberanordnung nach Anspruch 2 oder 3,
**dadurch gekennzeichnet, daß** bei unbetätigter Bremsdruckgeberanordnung (1, 1', 1") die Hydraulikkammer (4) mit der Hilfs-Hydraulikkammer (6) in Fluidverbindung steht.

5. Bremsdruckgeberanordnung nach einem der Ansprüche 2 bis 4,
**dadurch gekennzeichnet, daß** bei betätigter Bremsdruckgeberanordnung (1, 1', 1") die Fluidverbindung zwischen der Hydraulikkammer (4) und der Hilfs-Hydraulikkammer (6) unterbrochen ist.

6. Bremsdruckgeberanordnung nach einem der Ansprüche 1 bis 5,
**dadurch gekennzeichnet, daß** sich nach Einleiten der Betätigungskraft (F) das Volumen jeder Hydraulikkammer (4, 40) prozentual weniger verkleinert als das Volumen der Hilfs-Hydraulikkammer (6).

7. Bremsdruckgeberanordnung nach einem der Ansprüche 1 bis 6,
**dadurch gekennzeichnet, daß** eine ständige Fluidverbindung von der Hilfs-Hydraulikkammer (6) zu der Druckerhöhungspumpe (10, 10', 10") besteht.

8. Bremsdruckgeberanordnung nach einem der Ansprüche 1 bis 7,
**dadurch gekennzeichnet, daß** eine Betätigung der Druckerhöhungspumpe (10, 10', 10") nur bei einer Betätigung des Eingangsgliedes erfolgt.

9. Bremsdruckgeberanordnung nach einem der Ansprüche 1 bis 8,
**dadurch gekennzeichnet, daß** die Förderleistung der Druckerhöhungspumpe (10, 10', 10") abhängig von einer mit der Betätigung des Eingangsgliedes in Beziehung stehenden Größe ist.

10. Bremsdruckgeberanordnung nach einem der Ansprüche 1 bis 9,
**dadurch gekennzeichnet, daß** die Förderleistung der Druckerhöhungspumpe (10, 10', 10") abhängig von der Veränderung des Volumens der Hilfs-Hydraulikkammer (6) ist.

11. Bremsdruckgeberanordnung nach einem der Ansprüche 1 bis 10,
**dadurch gekennzeichnet, daß** die Druckerhöhungspumpe (10, 10', 10") in Richtung von der Radbremse (3) zu der Hilfs-Hydraulikkammer (6) nicht durchströmbar ist.

12. Bremsdruckgeberanordnung nach Anspruch 11,
**dadurch gekennzeichnet, daß** eine Ventilanordnung (12) parallel zu der Druckerhöhungspumpe (10, 10', 10") geschaltet ist, wobei in einer ersten Stellung (12.1) der Ventilanordnung (12) der Ausgang der Hilfs-Hydraulikkammer (6) in direkter Fluidverbindung mit dem Ausgang der Hydraulikkammer (4) steht und in einer zweiten Stellung (12.2) der Ventilanordung (12) eine Fluidverbindung zwischen dem Ausgang der Hilfs-Hydraulikkammer (6) und dem Ausgang der Hydraulikkammer (4) nur über die Druckerhöhungspumpe (10, 10', 10") besteht.

13. Bremsdruckgeberanordnung nach Anspruch 12,
**dadurch gekennzeichnet, daß** die Ventilanordnung (12) in die erste Stellung (12.1) federnd vorgespannt ist und die zweite Stellung (12.2) in Abhängigkeit von einem in der Hilfs-Hydraulikkammer (6) erzeugten Druck einnimmt.

14. Bremsdruckgeberanordnung nach einem der Ansprüche 1 bis 10,
**dadurch gekennzeichnet, daß** die Förderrichtung der Druckerhöhungspumpe (10') umkehrbar ist, so daß die Druckerhöhungspumpe (10') auch in Richtung von der Radbremse (3) zu der Hilfs-Hydraulikkammer (6) fördern kann.

15. Hydraulische Bremsanlage mit einer Bremsdruckgeberanordnung nach einem der Ansprüche 1 bis 13,
**dadurch gekennzeichnet, daß** eine Antiblockierregeleinrichtung (20) zwischen der Bremsdruckgeberanordnung (1, 1', 1") und der Radbremse (3) angeordnet ist, wobei die Druckerhöhungspumpe (10, 10', 10") Bestandteil der Antiblockierregeleinrichtung (20) ist.

16. Hydraulische Bremsanlage nach Anspruch 15,
**dadurch gekennzeichnet, daß** zwischen einem Druckspeicher (23) der Antiblockierregeleinrichtung (20) und der Eingangsseite (10e, 10e") der Druckerhöhungspumpe (10, 10', 10") ein Rückschlagventil (24) angeordnet ist, das eine Strömungsverbindung nur in Richtung von dem Druckspeicher (23) zu der Eingangsseite (10e, 10e'') der Druckerhöhungspumpe (10, 10', 10") zulässt.

17. Hydraulische Bremsanlage nach Anspruch 16,
**dadurch gekennzeichnet, daß** eine Drossel (25) parallel zu dem Rückschlagventil (24) geschaltet ist.

18. Hydraulische Bremsanlage nach einem der Ansprüche 15 bis 17,
**dadurch gekennzeichnet, daß** zwischen der Bremsdruckgeberanordnung (1, 1', 1") und der Antiblockierregeleinrichtung (20) bzw. der zumindest einen Radbremse (3) ein Umschaltventil (30) angeordnet ist, um eine Verbindung zwischen der Bremsdruckgeberanordnung (1, 1', 1") und der Antiblockierregeleinrichtung (20) bzw. der Radbremse (3) herzustellen oder zu trennen.

19. Hydraulische Bremsanlage nach Anspruch 18,
**dadurch gekennzeichnet, daß** ein Überdruckventil (31) parallel zu dem Umschaltventil (30) geschaltet ist.

20. Hydraulische Bremsanlage nach Anspruch 18 oder 19,
**dadurch gekennzeichnet, daß** zwischen dem Reservoir (5) für Bremsfluid und der Hilfs-Hydraulikkammer (6) eine Vorladeeinheit (40) angeordnet ist, die mittels eines elektronisch steuerbaren Aktuators (45) betätigbar ist.

21. Hydraulische Bremsanlage nach einem der Ansprüche 15 bis 17,
**dadurch gekennzeichnet, daß** zur Betätigung der Bremsdruckgeberanordnung (1, 1', 1") anstelle oder zusätzlich zu einer Betätigung über das Eingangsglied ein elektronisch steuerbarer Bremskraftverstärker (50) vorhanden ist.

22. Hydraulische Bremsanlage nach einem der Ansprüche 15 bis 21,
**gekennzeichnet durch** einen ersten und einen zweiten Bremskreis (I., II.), wobei für den ersten und zweiten Bremskreis (I., II.) jeweils eine Bremsdruckgeberanordnung (1, 1') vorhanden ist.

23. Hydraulische Bremsanlage nach Anspruch 22,
**dadurch gekennzeichnet, daß** die für den ersten und zweiten Bremskreis (I., II.) vorgesehenen Bremsdruckgeberanordnungen (1, 1') parallel zueinander angeordnet und über das Eingangsglied synchron betätigbar sind.

24. Hydraulische Bremsanlage nach Anspruch 23,
**dadurch gekennzeichnet, daß** das Eingangsglied mit einem Führungselement (60) gekoppelt ist, das parallel zu den für den ersten und zweiten Bremskreis (I., II.) vorgesehenen Bremsdruckgeberanordnungen (1, 1') axial verschiebbar ist.

25. Hydraulische Bremsanlage nach Anspruch 23 oder 24,
**dadurch gekennzeichnet, daß** die über Eingangsglied eingeleitete Betätigungskraft über eine Waagebalkenanordnung (61) in die für den ersten und zweiten Bremskreis (I., II.) vorgesehenen Bremsdruckgeberanordnungen (1, 1') eingeleitet wird.

## Claims

1. A brake-pressure-transmitter arrangement (1, 1', 1'') for a hydraulic motor-vehicle brake system which, after an actuating force (F) has been introduced via an input member (2) by reducing the volume of a hydraulic chamber (4) to be filled with brake fluid, provides a brake pressure at the output of the hydraulic chamber (4) for at least one wheel brake (3), there being an auxiliary hydraulic chamber (6) for brake fluid whose volume is likewise reduced after introduction of the actuating force (F), and an output of the auxiliary hydraulic chamber (6) being in fluid connection with the input side (10e) of a booster pump (10, 10', 10''),
**characterized in that**
- the booster pump (10, 10', 10'') delivers brake fluid in the direction from the auxiliary hydraulic chamber (6) to said at least one wheel brake (3), and **in that**
- the output side (10a) of the booster pump (10, 10', 10'') is in fluid connection with the output of the hydraulic chamber (4) so that an increased brake pressure is provided for said at least one wheel brake (3).

2. The brake-pressure-transmitter arrangement according to Claim 1, **characterized by** a second hydraulic chamber (40), which is to be filled with brake fluid and is connected in series with the hydraulic chamber (4) and the volume of which, after introduction of the actuating force (F), is likewise reduced in order to provide a brake pressure at the output thereof for at least one further wheel brake (3).

3. The brake-pressure-transmitter arrangement according to Claim 1 or 2, **characterized in that**, when the brake-pressure transmitter arrangement (1, 1', 1'') is not actuated, each hydraulic chamber (4, 40) and the auxiliary hydraulic chamber (6) are in fluid connection with a reservoir (5) for brake fluid, and **in that**, when the brake-pressure-transmitter arrangement (1, 1', 1'') is actuated, the fluid connection between the reservoir (5) for brake fluid and each hydraulic chamber (4, 40) as well as the auxiliary hydraulic chamber (6) is interrupted.

4. The brake-pressure-transmitter arrangement according to Claim 2 or 3, **characterized in that**, when the brake-pressure-transmitter arrangement (1, 1, 1'') is not actuated, the hydraulic chamber (4) is in fluid connection with the auxiliary hydraulic chamber (6).

5. The brake-pressure-transmitter arrangement according to one of Claims 2 to 4, **characterized in that**, when the brake-pressure-transmitter arrangement (1, 1', 1'') is actuated, the fluid connection between the hydraulic chamber (4) and the auxiliary hydraulic chamber (6) is interrupted.

6. The brake-pressure-transmitter arrangement according to one of Claims 1 to 5, **characterized in that**, after introduction of the actuating force (F), the volume of each hydraulic chamber (4, 40) is reduced by a smaller percentage than the volume of the auxiliary hydraulic chamber (6).

7. The brake-pressure-transmitter arrangement according to one of Claims 1 to 6, **characterized in that** there is a constant fluid connection from the auxiliary hydraulic chamber (6) to the booster pump (10, 10', 10'').

8. The brake-pressure-transmitter arrangement according to one of Claims 1 to 7, **characterized in that** the booster pump (10, 10', 10'') is actuated only when the input member is actuated.

9. The brake-pressure-transmitter arrangement according to one of Claims 1 to 8, **characterized in that** the delivery rate of the booster pump (10, 10', 10'') depends on a variable related to the actuation of the input member.

10. The brake-pressure-transmitter arrangement according to one of Claims 1 to 9, **characterized in that** the delivery rate of the booster pump (10, 10', 10'') depends on the change in the volume of the auxiliary hydraulic chamber (6).

11. The brake-pressure-transmitter arrangement according to one of Claims 1 to 10, **characterized in that** flow cannot occur through the booster pump (10, 10', 10'') in the direction from the wheel brake (3) to the auxiliary hydraulic chamber (6).

12. The brake-pressure-transmitter arrangement according to Claim 11, **characterized in that** a valve arrangement (12) is connected parallel to the booster pump (10, 10', 10''), in which case, in a first position (12.1) of the valve arrangement (12), the output of the auxiliary hydraulic chamber (6) is in direct fluid connection with the outlet of the hydraulic chamber (4) and, in a second position (12.2) of the valve arrangement (12), there is a fluid connection between the output of the auxiliary hydraulic chamber (6) and the output of the hydraulic chamber (4) only via the booster pump (10, 10', 10'').

13. The brake-pressure-transmitter arrangement according to Claim 12, **characterized in that** the valve arrangement (12) is resiliently biased in the first position (12.1) and assumes the second position (12.2) as a function of a pressure produced in the auxiliary hydraulic chamber (6).

14. The brake-pressure-transmitter arrangement according to one of Claims 1 to 10, **characterized in that** the delivery direction of the booster pump (10') is reversible, so that the booster pump (10') can also deliver in the direction from the wheel brake (3) to the auxiliary hydraulic chamber (6).

15. A hydraulic brake system having a brake-pressure-transmitter arrangement according to one of Claims 1 to 13, **characterized in that** an anti-lock control device (20) is arranged between the brake-pressure-transmitter arrangement (1, 1', 1'') and the wheel brake (3), the booster pump (10, 10', 10'') being a component of the anti-lock control device (20).

16. The hydraulic brake system according to Claim 15, **characterized in that** a non-return valve (24) is arranged between a pressure accumulator (23) of the anti-lock control device (20) and the input side (10e, 10e") of the booster pump (10, 10', 10'') which permits a fluid connection only in the direction from the pressure accumulator (23) to the input side (10e, 10e") of the booster pump (10, 10', 10'').

17. The hydraulic brake system according to Claim 16, **characterized in that** a restrictor (25) is connected parallel to the non-return valve (24).

18. The hydraulic brake system according to one of Claims 15 to 17, **characterized in that** a changeover valve (30) is arranged between the brake-pressure-transmitter arrangement (1, 1', 1'') and the anti-lock control device (20) or the at least one wheel brake (3), respectively, in order to provide or interrupt a connection between the brake-pressure-transmitter arrangement (1, 1', 1'') and the anti-lock control device (20) or the wheel brake (3), respectively.

19. The hydraulic brake system according to Claim 18, **characterized in that** a pressure relief valve (31) is connected parallel to the changeover valve (30).

20. The hydraulic brake system according to Claim 18 or 19, **characterized in that** a precharging unit (40) adapted to be actuated by means of an electronically controllable actuator (45) is arranged between the reservoir (5) for brake fluid and the auxiliary hydraulic chamber (6).

21. The hydraulic brake system according to one of Claims 15 to 17, **characterized in that** instead of or in addition to an actuation via the input member an electronically controllable brake booster (50) is provided for actuating the brake-pressure-transmitter arrangement (1, 1', 1'').

22. The hydraulic brake system according to one of Claims 15 to 21, **characterized by** a first and a second brake circuit (I., II.), with one brake-pressure-transmitter arrangement (1, 1') each being provided for the first and the second brake circuit (I., II.).

23. The hydraulic brake system according to Claim 22, **characterized in that** the brake-pressure-transmitter arrangements (1, 1') provided for the first and second brake circuits (I., II.) are arranged parallel to one another and can be actuated in synchronism via the input member.

24. The hydraulic brake system according to Claim 23, **characterized in that** the input member is coupled to a guide element (60), which is axially displaceable parallel to the brake-pressure-transmitter arrangements (1, 1') provided for the first and second brake circuits (I., II.).

25. The hydraulic brake system according to Claim 23 or 24, **characterized in that** the actuating force introduced via input member is introduced via a balance-beam arrangement (61) into the brake-pressure-transmitter arrangements (1, 1') provided for the first and second brake circuits (I., II.)

## Revendications

1. Dispositif de fourniture de pression de freinage (1, 1', 1'') pour un système de freinage hydraulique de véhicule automobile qui après introduction d'une force d'actionnement (F) par l'intermédiaire d'un élément d'entrée (2) par réduction du volume d'une chambre hydraulique (4) à remplir avec du fluide de freinage fournit à une sortie de celle-ci une pression de freinage pour au moins un frein de roue (3), dans lequel il y a une chambre hydraulique auxiliaire (6) pour du fluide de freinage, dont le volume se réduit également après l'introduction de la force d'actionnement (F) et dans lequel une sortie de la chambre hydraulique auxiliaire (6) est en communication par fluide avec l'entrée (10e) d'une pompe d'augmentation de pression (10, 10', 10"),
**caractérisé en ce que**
- la pompe d'augmentation de pression (10, 10', 10") refoule du fluide de freinage dans la direction allant de la chambre hydraulique auxiliaire (6) audit au moins un frein de roue (3) et **en ce que**
- le côté de sortie (10a) de la pompe d'augmentation de pression (10, 10', 10") est en communication par fluide avec la sortie de la chambre hydraulique (4) de telle façon qu'une pression de freinage renforcée soit fournie audit au moins un frein de roue (3).

2. Dispositif de fourniture de pression de freinage selon la revendication 1,
**caractérisé par** une deuxième chambre hydraulique (40) à remplir avec du fluide de freinage qui est montée en série avec la chambre hydraulique (4) et dont le volume se réduit également après l'introduction de la force d'actionnement (F) pour fournir une pression de freinage à une sortie de celle-ci pour au moins un autre frein de roue (3).

3. Dispositif de fourniture de pression de freinage selon la revendication 1 ou 2,
**caractérisé en ce que** lorsque le dispositif de fourniture de pression de freinage (1, 1', 1") n'est pas actionné, chaque chambre hydraulique (4, 40) et la chambre hydraulique auxiliaire (6) sont en communication par fluide avec un réservoir (5) pour fluide de freinage et **en ce que** lorsque le dispositif de fourniture de pression de freinage (1, 1', 1") est actionné la communication par fluide entre le réservoir (5) pour fluide de freinage et chaque chambre hydraulique (4, 40) ainsi que la chambre hydraulique auxiliaire (6) est interrompue.

4. Dispositif de fourniture de pression de freinage selon la revendication 2 ou 3,
**caractérisé en ce que** lorsque le dispositif de fourniture de pression de freinage (1, 1', 1") n'est pas actionné, la chambre hydraulique (4) est en communication par fluide avec la chambre hydraulique auxiliaire (6).

5. Dispositif de fourniture de pression de freinage selon l'une quelconque des revendications 2 à 4,
**caractérisé en ce que** lorsque le dispositif de fourniture de pression de freinage (1, 1', 1") est actionné, la communication par fluide entre la chambre hydraulique (4) et la chambre hydraulique auxiliaire (6) est interrompue.

6. Dispositif de fourniture de pression de freinage selon l'une quelconque des revendications 1 à 5,
**caractérisé en ce qu'**après l'introduction de la force d'actionnement (F), le volume de chaque chambre hydraulique (4, 40) est moins réduit en proportion que le volume de la chambre hydraulique auxiliaire (6).

7. Dispositif de fourniture de pression de freinage selon l'une quelconque des revendications 1 à 6,
**caractérisé en ce qu'**il y a une communication par fluide permanente de la chambre hydraulique auxiliaire (6) à la pompe d'augmentation de pression (10, 10', 10").

8. Dispositif de fourniture de pression de freinage selon l'une quelconque des revendications 1 à 7,
**caractérisé en ce qu'**un actionnement de la pompe d'augmentation de pression (10, 10', 10") n'a lieu que lors d'un actionnement de l'élément d'entrée.

9. Dispositif de fourniture de pression de freinage selon l'une quelconque des revendications 1 à 8,
**caractérisé en ce que** le débit de la pompe d'augmentation de pression (10, 10', 10") dépend d'une grandeur en relation avec l'actionnement de l'élément d'entrée.

10. Dispositif de fourniture de pression de freinage selon l'une quelconque des revendications 1 à 9,
**caractérisé en ce que** le débit de la pompe d'augmentation de pression (10, 10', 10") dépend de la modification du volume de la chambre hydraulique auxiliaire (6).

11. Dispositif de fourniture de pression de freinage selon l'une quelconque des revendications 1 à 10,
**caractérisé en ce qu'**il ne peut pas y avoir d'écoulement à travers la pompe d'augmentation de pression (10, 10', 10") dans la direction allant du frein de roue (3) à la chambre hydraulique auxiliaire (6).

12. Dispositif de fourniture de pression de freinage selon la revendication 11,
**caractérisé en ce qu'**un dispositif de vanne (12) est monté en parallèle avec la pompe d'augmentation de pression (10, 10', 10''), de telle sorte que dans une première position (12.1) du dispositif de vanne (12) la sortie de la chambre hydraulique auxiliaire (6) soit en communication par fluide directe avec la sortie de la chambre hydraulique (4) et que dans une deuxième position (12.2) du dispositif de vanne (12) il n'y ait une communication par fluide entre la sortie de la chambre hydraulique auxiliaire (6) et la sortie de la chambre hydraulique (4) que par l'intermédiaire de la pompe d'augmentation de pression (10, 10', 10").

13. Dispositif de fourniture de pression de freinage selon la revendication 12,
**caractérisé en ce que** le dispositif de vanne (12) est poussé élastiquement en permanence dans la première position (12.1) et prend la deuxième position (12.2) en fonction d'une pression engendrée dans la chambre hydraulique auxiliaire (6).

14. Dispositif de fourniture de pression de freinage selon l'une quelconque des revendications 1 à 10,
**caractérisé en ce que** la direction de refoulement de la pompe d'augmentation de pression (10') est inversible de telle façon que la pompe d'augmentation de pression (10') puisse refouler aussi dans la direction allant du frein de roue (3) à la chambre hydraulique auxiliaire (6).

15. Système de freinage hydraulique comprenant un dispositif de fourniture de pression de freinage selon l'une quelconque des revendication 1 à 13,
**caractérisé en ce qu'**un système de régulation antiblocage (20) est disposé entre le dispositif de fourniture de pression de freinage (1, 1', 1'') et le frein de roue (3), la pompe d'augmentation de pression (10, 10', 10") faisant partie du système de régulation antiblocage (20).

16. Système de freinage hydraulique selon la revendication 15,
**caractérisé en ce qu'**entre un accumulateur de pression (23) du système de régulation antiblocage (20) et le côté de l'entrée (10e, 10e") de la pompe d'augmentation de pression (10, 10', 10) est disposé un clapet anti-retour (24) qui ne permet une communication d'écoulement que dans la direction allant de l'accumulateur de pression (23) à l'entrée (10e, 10e") de la pompe d'augmentation de pression (10, 10", 10").

17. Système de freinage hydraulique selon la revendication 16,
**caractérisé en ce qu'**un étranglement (25) est monté en parallèle au clapet anti-retour (24).

18. Système de freinage hydraulique selon l'une quelconque des revendications 15 à 17,
**caractérisé en ce qu'**une vanne d'inversion (30) est disposée entre le dispositif de fourniture de pression de freinage (1, 1', 1'') et le système de régulation antiblocage (20), respectivement ledit au moins un frein de roue (3), pour établir ou interrompre une communication entre le dispositif de fourniture de pression de freinage (1, 1', 1") et le système de régulation antiblocage (20), respectivement le frein de roue (3).

19. Système de freinage hydraulique selon la revendication 18,
**caractérisé en ce qu'**une soupape de sûreté (31) est montée en parallèle à la vanne d'inversion (30).

20. Système de freinage hydraulique selon la revendication 18 ou 19,
**caractérisé en ce qu'**une unité de pré-mise en charge (40) est disposée entre le réservoir (5) pour fluide de freinage et la chambre hydraulique auxiliaire (6), qui peut être actionnée au moyen d'un actionneur (45) pouvant être commandé électroniquement.

21. Système de freinage hydraulique selon l'une quelconque des revendications 15 à 17,
**caractérisé en ce qu'**il y a, pour l'actionnement du dispositif de fourniture de pression de freinage (1, 1', 1"), au lieu ou en plus d'un actionnement par l'intermédiaire de l'élément d'entrée, un servofrein (50) pouvant être commandé électroniquement.

22. Système de freinage hydraulique selon l'une quelconque des revendications 15 à 21,
**caractérisé par** un premier et un deuxième circuits de freinage (I., II.) et en ce qu'il y a dans ce cas un dispositif de fourniture de pression de freinage respectif pour le premier et le deuxième circuits de freinage (I., II.).

23. Système de freinage hydraulique selon la revendication 22,
**caractérisé en ce que** les dispositifs de fourniture de pression (1, 1') prévus pour le premier et le deuxième circuits de freinage (I., II.) sont disposés parallèlement entre eux et peuvent être actionnés de façon synchrone par l'intermédiaire de l'élément d'entrée.

24. Système de freinage hydraulique selon la revendication 23,
**caractérisé en ce que** l'élément d'entrée est couplé avec un élément de guidage (60) qui peut coulisser axialement parallèlement aux dispositifs de fourniture de pression de freinage prévus pour le premier et le deuxième circuits de freinage (I., II.).

25. Système de freinage hydraulique selon la revendication 23 ou 24,
**caractérisé en ce que** la force d'actionnement introduite par l'intermédiaire de l'élément d'entrée est transmise aux dispositifs de fourniture de pression de freinage (1, 1') prévus pour les premier et deuxième circuits de freinage (I., II.) par l'intermédiaire d'un système de fléau (61).
